# EUROPEAN PATENT APPLICATION

(11) **EP 4 628 268 A1**
(43) Date of publication of application: **08.10.2025**
(21) Application number: 24909204.0
(22) Date of filing: 15.11.2024
(51) Int. Cl.: B27K 3/02, B27K 3/32, B27K 3/18, B27K 3/20, B27K 5/06, B32B 21/14

(54) **UNIDIRECTIONAL WOOD FIBER PAPER AND PREPARATION METHOD THEREFOR, UNIDIRECTIONAL WOOD FIBER PAPER PREPREG AND PREPARATION METHOD THEREFOR, AND WOOD FIBER PAPER-REINFORCED COMPOSITE MATERIAL**

(30) Priority: 06.02.2024 CN 202410171644
(71) Applicant: Freshape SA, 1020 Renens (CH)
(72) Inventor: JIA, Yunlong, Shanghai 201112 (CN); ZHOU, Zuoxin, Shanghai 201112 (CN); WANG, Ruonan, Shanghai 201112 (CN); DUAN, Longjiang, Shanghai 201112 (CN); WU, Haocheng, Shanghai 201112 (CN); LIN, Shihui, Shanghai 201112 (CN); ZHENG, Yunlong, Shanghai 201112 (CN)
(74) Representative: Ridderbusch, Oliver
(86) International application number: PCT/CN2024/132395
(87) International publication number: WO 2025/167254

(57) **Abstract**

The present invention provides unidirectional wood fiber paper. The unidirectional wood fiber paper is prepared by shrinking a unidirectional veneer with partial substances removed in at least one direction; partial the substances include lignin and hemicellulose; the thickness of the unidirectional wood fiber paper is smaller than or equal to 0.6 mm; and the apparent thickness of the unidirectional wood fiber paper under a pressure not larger than 0.005 MPa is not greater than 4 times of the average thickness of the unidirectional wood fiber paper. Compared with related technology, the unidirectional wood fiber paper provided by the present invention is small in thickness and excellent in mechanical performance, has anisotropy and is composed of 100% pure natural materials; and the unidirectional wood fiber paper has a densification effect in the thickness direction by shrinkage, moreover, moreover, the transverse binding force and compactness of the unidirectional wood fiber paper are improved, thereby reducing transverse cracking of the unidirectional wood fiber paper.

## Description

The present application claims priority to Chinese Patent Application 22024101716440, entitled "WOOD FIBER REINFORCED MATERIAL, AND PREPARATION METHOD AND USE THEREFOR" filed with the Chinese Patent Office on February 6, 2024, which is partially incorporated by reference in the present application.

### TECHNICAL FIELD

The present invention belongs to the technical field of fiber reinforced composites, and specifically relates to unidirectional wood fiber paper and a preparation method therefor, a unidirectional wood fiber paper prepreg and a preparation method therefor, and a wood fiber paper reinforced composite and a preparation method therefor.

### BACKGROUND

The plant fiber prepreg market is one of the emerging markets in the field of composites, and with the growing demand for sustainable materials and increasing environmental awareness, the application of plant fiber prepregs in multiple industries is gaining more attention. However, compared with traditional synthetic fibers, a plant fiber prepreg still has high production cost, and its performance is lower than that of artificial fibers, which affects the market promotion; one of the main reasons is that plant fibers in nature, especially hemp with good performance, are short fibers (centimeter level); a continuous (several meters or even longer) plant fiber prepreg can be produced by a complex production process, for example, a hemp fiber prepreg with good performance at present is produced by the production processes of: harvesting, retting, breaking, scutching, hackling, modifying, drying, laying and arranging, and impregnating with resin, there are several mechanical actions in the production process, which cause inevitable damage to the strength of the fibers. Moreover, there are many processes, resulting in high cost.

As a kind of plant fiber, wood fibers are longer, and theoretically longer plant fibers can be obtained, but the performance are needed to be improved. In the last ten years or so, the industry and scholars have proposed some public technologies to improve the performance of wood, and found that after removing a certain amount of lignin from the wood by chemical treatment, the wood will have good compressibility, and further a wood structure with excellent mechanical properties can be obtained by applying pressure on the wood in one direction (thickness direction). However, it is difficult to directly apply to the production and processing of a unidirectional veneer prepreg in the related technology, because 1, the current wood chemical treatment is still in the laboratory principle stage, it needs a long cycle and high energy consumption to achieve a high lignin removal ratio; 2, the current public technology is actually to treat and process thicker wood slabs, once the thickness of the treated unidirectional wood is low to a certain extent (such as ≤ 0.8mm, hereinafter referred to as the unidirectional veneer), the unidirectional veneer subjected to chemical treatment is easy to face transverse cracking and poor transverse mechanical properties in a compressing direction, and there is no solution to solve this problem in the related technology; and 3, the unidirectional veneer subjected to chemical treatment is very prone to wrinkles during the drying and dewatering process (this is generally not a problem for thick wood slabs), so it is also necessary to consider how to quickly drain the water from the wood while being dense and ensure the flatness of the wood.

### SUMMARY

In view of this, in order to solve the technical problem, the present invention provides unidirectional wood fiber paper with excellent mechanical property and high flatness and a preparation method therefor, a unidirectional wood fiber paper prepreg and a preparation method therefor, and a wood fiber paper reinforced composite and a preparation method therefor.

The present invention provides unidirectional wood fiber paper, being prepared by shrinking a unidirectional veneer with partial substances removed in at least one direction, wherein
partial substances comprise lignin and hemicellulose;
the thickness of the unidirectional wood fiber paper is smaller than or equal to 0.6 mm; and
the apparent thickness of the unidirectional wood fiber paper under a pressure not larger than 0.005 MPa is not greater than 4 times of the average thickness of the unidirectional wood fiber paper.

Preferably, the unidirectional wood fiber paper comprises wood fibers and/or fiber bundles, the wood fibers and/or the fiber bundles are integrally arranged or extend in a single direction at a microscopic level.

Preferably, the density of the unidirectional wood fiber paper is 0.8-1.5 g/cm³;
and/or, the areal density of the unidirectional wood fiber paper is 20-400 g/m²;
and/or, the tensile strength of the unidirectional wood fiber paper in a direction parallel to the wood fibers is 150-1000 MPa.

Preferably, the thickness of the unidirectional wood fiber paper is 0.03-0.6 mm;
and/or, the Young's modulus of the unidirectional wood fiber paper in the direction parallel to the wood fibers is preferably 20-80 GPa.

Preferably, the thickness of the unidirectional veneer is less than or equal to 0.8 mm;
and/or, decomposition of the shrinkage force comprises transverse shrinkage and thickness shrinkage.

Preferably, the unidirectional veneer with partial substances removed shrinks in at least two directions;
the shrinkage comprises transverse shrinkage and thickness shrinkage; and
the directions of the shrinkage forces for the transverse shrinkage and the thickness shrinkage are crossed.

Preferably, the unidirectional veneer with partial substances removed comprises wood fibers and/or fiber bundles; the wood fibers and/or the fiber bundles are integrally arranged or extend in a single direction at a microscopic level;
the shrinkage force of the transverse shrinkage is the force parallel to the unidirectional veneer, and the force is in direction intersected with the extending direction of the wood fibers and/or fiber bundles in the plane; and/or,
the shrinkage force of thickness shrinkage is the force in the direction vertical to the unidirectional veneer; and
the force in the horizontal direction and the force in the vertical direction are original applied forces independently from each other, and/or forces produced by a force after decomposed or forces after composed.

Preferably, the apparent thickness of the unidirectional wood fiber paper under the pressure of 0.005 MPa does not exceed 3 times of the average thickness of the unidirectional wood fiber paper;
and/or, all and/or part of the unidirectional wood fiber paper has smooth plastic feeling;
and/or, when the thickness of the unidirectional wood fiber paper is less than 0.15 mm, the light transmittance of all and/or part of the unidirectional wood fiber paper is 2%-70%.

Preferably, the weight loss of unidirectional veneer with partial substances removed is 10%-60% relative to the unidirectional veneer;
and/or, the shrinkage percentage of the transverse shrinkage is 2%-40%; and the shrinkage percentage of the thickness shrinkage is 20%-90%.

The present invention further provides a preparation method for unidirectional wood fiber paper, comprising the following steps:
S1) chemically modifying a unidirectional veneer to obtain a unidirectional veneer with partial substances removed; and
S2) performing shrinkage treatment on the unidirectional veneer with partial substances removed in at least one direction to obtain the unidirectional wood fiber paper; and
decomposition of the shrinkage force comprises transverse shrinkage and thickness shrinkage.

Preferably, the thickness of the unidirectional veneer is 0.05-0.8 mm;
and/or, the areal density of the unidirectional veneer is 20-450 g/m²;
and/or, the chemical modification in S1) is performed in a closed high-pressure system; the target temperature of chemical modification is 100-150°C; the target pressure of chemical modification is 0.07-1.9 MPa; the chemical modification is maintained in the target temperature/pressure for 1-12 h;
or, the chemical modification is performed under normal pressure; the chemical modification is maintained in the target temperature/pressure for 24-72 h; the temperature of chemical modification is the temperature at which water boils without elevated pressures;
and/or, after chemical modification is performed, a reaction solution is cooled, thus obtaining the unidirectional veneer with partial substances removed.

Preferably, in step S1), a modification solution for chemical modification comprises an alkaline substance, a sulfonating agent and water;
the pH value of the modification solution is 12-14;
the concentration of the alkaline substance in the modification solution is 0.01-5 kg/L;
the alkaline substance is one or more selected from the group consisting of sodium hydroxide, potassium hydroxide, sodium bicarbonate and potassium bicarbonate;
the concentration of the sulfonating agent in the modification solution is 0.01-5 kg/L;
the sulfonating agent in the modification solution is one or more selected from the group consisting of sulfite, chlorosulfonic acid, hydroxymethylsulfonate, sulfuryl chloride and sulfamic acid;
and/or, the material ratio of the unidirectional veneer and the modification solution for chemical modification is 4.6-184 cm³:1 L.
and/or, compared with the unidirectional veneer, the mass of the unidirectional veneer with partial substances removed is reduced by 10%-60%.

Preferably, the unidirectional veneer is placed in a material pot for chemical modification;
the material pot comprises a frame body, a partition plate and a frame cover; the partition plate is arranged in the frame body; and the side wall of the frame body, the bottom of the frame body, the partition plate and the frame cover are all provided with holes.

Preferably, the material pot is a cylindrical material frame; a plurality of partition plates are provided; and the plurality of partition plates are arranged in concentric circles within the frame body.

Preferably, the material pot is a cuboid material frame; a plurality of partition plates are provided; and the plurality of partition plates are arranged in parallel within the material pot.

Preferably, the shrinkage treatment comprises transverse shrinkage treatment and thickness shrinkage treatment; and the force of the transverse shrinkage treatment is intersected with the force of the thickness shrinkage treatment.

Preferably, the transverse shrinkage treatment is to apply an external mechanical force and/or perform spontaneous shrinkage as a result of dehydration in the transverse direction; and
the external mechanical force applied in the transverse direction is in a direction intersected with the extending direction of the wood fibers and/or fiber bundles of the unidirectional veneer with partial substances removed in the plane.

Preferably, applying the external mechanical force in the transverse direction is specifically that a film material that can perform transverse shrinkage is used and attached to the surface of unidirectional veneer with partial substances removed, and after pressure is applied, the film material is removed;
and/or, roller rubbing treatment is performed on the unidirectional veneer with partial substances removed;
and/or, pressure is transversely applied to the unidirectional veneer with partial substances removed

Preferably, pressure for applying the external mechanical force in the transverse direction is 0.001-1.5 MPa;
and/or, the temperature of the transverse shrinkage treatment is 15°C-150°C;
and/or, the time of the transverse shrinkage treatment is 1 s to 4 min.

Preferably, the thickness shrinkage comprises hot-pressing treatment under a negative pressure condition;
the pressure of the hot-pressing treatment is 0.1-60 MPa;
and/or, the temperature of the hot-pressing treatment is 50°C-150°C;
and/or, the time of the hot-pressing treatment is 0.5-20 min.

Preferably, the thickness shrinkage is performed on a single or stacked veneers; 2-20 veneers are stacked; and
the pressure of the thickness shrinkage treatment in the stacked condition is 0.1-60 MPa.

Preferably, the shrinkage rate in the transverse shrinkage treatment is 2%-40%;
and/or, the shrinkage rate in the thickness shrinkage is 20%-90%.

Preferably, splicing is carried out before or after shrinkage treatment; and
the splicing is specifically to mark splicing contours on the unidirectional veneer with partial substances removed or the wood fiber paper subjected to shrinkage treatment, and then splice the corresponding parts.

The present invention further provides a preparation method for unidirectional wood fiber paper, comprising the following steps:
A1) chemically modifying a unidirectional veneer to obtain a unidirectional veneer with partial substances removed; and
A2) performing shrinkage treatment and levelling treatment on the unidirectional veneer with partial substances removed in at least one direction to obtain the unidirectional wood fiber paper; and
the levelling treatment is to perform planar hot pressing in a negative pressure air pumping environment.

Preferably, exhaust channels are arranged on two contact surface or a single contact surface of the unidirectional wood fiber paper during levelling treatment.

Preferably, the pressure of planar hot pressing is 0.01-2 MPa;
and/or, the time of the levelling treatment is 0.1-4 min;
and/or, the temperature of the levelling treatment is 40°C-150°C.

Preferably, the levelling treatment is selected from one or more of vacuum thermoforming or negative-pressure hot-pressing treatment;
and/or, the water content of the unidirectional wood fiber paper is less than or equal to 10 wt%.

Preferably, the shrinkage treatment comprises transverse shrinkage treatment and thickness shrinkage treatment;
the thickness shrinkage treatment is to apply a mechanical pressure in the thickness direction;
the pressure for applying the mechanical pressure in the thickness direction is 0.01-80 MPa;
and/or, the time of the thickness shrinkage treatment is 0.1-3 min;
and/or, the temperature of the thickness shrinkage treatment is 15°C-150°C.

The present invention further provides a unidirectional wood fiber paper prepreg, the unidirectional wood fiber paper and a polymer layer attached to at least one surface of the unidirectional wood fiber paper.

Preferably, the mass of the polymer layer is 5%-85% of the mass of the unidirectional wood fiber paper prepreg;
and/or, the thickness ratio of the polymer layer to the unidirectional wood fiber paper is (5:1)-(0.05:1);
and/or, the areal density of the unidirectional wood fiber paper prepreg is 30-500 g/m²;
and/or, the thickness of the unidirectional wood fiber paper prepreg is 0.03-0.7 mm.

Preferably, the polymer layer comprises a thermoplastic polymer and/or a thermosetting polymer; and
the gram weight of the polymer layer is 5-200 g/m².

The present invention further provides a preparation method for a unidirectional wood fiber paper prepreg, comprising the following steps:
transferring a polymer to at least one surface of the unidirectional wood fiber paper to obtain the unidirectional wood fiber paper prepreg; and the transfer method is selected from one or more of film covering, printing, infiltration and coating.

The present invention further provides a wood fiber paper reinforced composite, comprising a plurality of layers of the unidirectional wood fiber paper; and
adjacent unidirectional wood fiber paper is bonded through the polymer.

Preferably, the tensile strength of the wood fiber paper reinforced composite is 130-1000 MPa;
and/or, the flexural strength of the wood fiber paper reinforced composite is 130-1000 MPa;
and/or, the Young's modulus of the wood fiber paper reinforced composite is 12-75 GPa.

Preferably, the thickness of one layer of wood fiber paper in the wood fiber paper reinforced composite is 0.02-0.6 mm;
and/or, the layered distribution of the wood fiber paper reinforced composite is clearly visible in the longitudinal cross-section;
and/or, the volume fraction of the wood fiber paper in the wood fiber paper reinforced composite is 40%-99%.

Preferably, at least one surface of the wood fiber paper reinforced composite is provided with a waterproof polymer layer.

The present invention further provides a preparation method for a wood fiber paper reinforced composite, comprising the following steps:
stacking, gluing and curing the unidirectional wood fiber paper to obtain the wood fiber paper reinforced composite;
and/or, stacking, gluing and curing the unidirectional wood fiber paper prepreg to obtain the wood fiber paper reinforced composite.

The present invention further provides a method for shrinkage of a unidirectional veneer, comprising: performing shrinkage treatment on the unidirectional veneer in at least one direction; and decomposition of the shrinkage force comprises transverse shrinkage and thickness shrinkage.

Preferably, the unidirectional veneer is subjected to chemical treatment firstly to remove partial substances, and then subjected to shrinkage treatment in the at least one direction.

Preferably, shrinkage comprises transverse shrinkage and thickness shrinkage; and directions of the shrinkage force for the transverse shrinkage and thickness shrinkage are crossed.

Preferably, the unidirectional veneer comprises wood fibers and/or fiber bundles; the wood fibers and/or the fiber bundles are integrally arranged or extend in a single direction at a microscopic level;
the shrinkage force of transverse shrinkage is the force in the direction parallel to the unidirectional veneer, and is in a direction intersected with the extending direction of the wood fibers and/or fiber bundles of the unidirectional veneer in the plane; and/or, the shrinkage force of thickness shrinkage is the force in the direction vertical to the unidirectional veneer; and
the force in the horizontal direction and the force in the vertical direction are original applied forces independently from each other, and/or, forces produced by a force after decomposed or forces after composed.

Preferably, the thickness shrinkage comprises hot-pressing treatment under a negative pressure condition;
the pressure of the hot-pressing treatment is 0.1-60 MPa;
and/or, the temperature of the hot-pressing treatment is 50 °C-150°C;
and/or, the time of the hot-pressing treatment is 0.5-20 min.

The present invention further provides a wood hollow tube, being prepared from the unidirectional wood fiber paper, the unidirectional wood fiber paper prepreg or the wood fiber reinforced composite.

The present invention provides unidirectional wood fiber paper. The unidirectional wood fiber paper is formed by shrinking a unidirectional veneer with partial substances removed in at least one direction; partial the substances include lignin and hemicellulose; the thickness of the unidirectional wood fiber paper is smaller than or equal to 0.6 mm; and the apparent thickness of the unidirectional wood fiber paper under a pressure not larger than 0.005 MPa is not greater than 4 times of the average thickness of the unidirectional wood fiber paper. Compared with related technology, the unidirectional wood fiber paper provided by the present invention is small in thickness and excellent in mechanical performance, has anisotropy and is composed of 100% pure natural materials; and the unidirectional wood fiber paper has the densification effect in the thickness direction by shrinkage, moreover, the transverse binding force and compactness of the unidirectional wood fiber paper are improved, thereby reducing transverse cracking of the unidirectional wood fiber paper.

Further, the present invention provides a unidirectional wood fiber paper prepreg which is similar to a fiber prepreg (such as a glass fiber prepreg and a carbon fiber prepreg) in the conventional composite industry, so that the product applicability is wide; moreover, the feedstock of the unidirectional wood fiber prepreg is high-performance unidirectional wood fiber paper, so it is green and environment-friendly; and a plurality of unidirectional wood fiber paper prepregs can be simply stacked and less pressure is applied to obtain a product, and the convenience of use is ensured.

Further, the present invention provides a wood fiber paper reinforced composite, which is layering laminated and has high mechanical properties.

Further, a surface of the wood fiber paper reinforced composite provided by the present invention is a polymer with waterproof performance, so that the wood fiber paper reinforced composite has high waterproof performance.

### BRIEF DESCRIPTION OF THE DRAWINGS

FIG. 1 is a microgram of unidirectional wood fiber paper provided by the present invention;
FIG. 2 is an object diagram of unidirectional wood fiber paper provided by the present invention;
FIG. 3 is a schematic diagram of a preparation flow of unidirectional wood fiber paper provided by the present invention;
FIG. 4 is a structural schematic diagram of a material pot for a vertical reactor provided by the present invention;
FIG. 5 is a schematic diagram of a unidirectional veneer placed in a vertical reactor provided by the present invention;
FIG. 6 is a structural schematic diagram of a material pot for a horizontal reactor provided by the present invention;
FIG. 7 is a schematic diagram of a unidirectional veneer placed in a horizontal reactor provided by the present invention;
FIG. 8 is an object diagram of cracks generated by unidirectional shrinkage in a thickness direction provided by the present invention;
FIG. 9 is a schematic diagram of sinking and shrinkage of a tube cavity of wood fiber paper pipe in spontaneous transverse shrinkage provided by the present invention;
FIG. 10 is an object diagram of a unidirectional wood fiber paper in spontaneous transverse shrinkage provided by the present invention;
FIG. 11 is a schematic diagram of continuous hot pressing processing of a hot roll provided by the present invention;
FIG. 12 is a schematic diagram of continuous hot pressing processing of a continuous flat press provided by the present invention;
FIG. 13 is a schematic diagram of continuous hot pressing processing of a belt press provided by the present invention;
FIG. 14 is a schematic diagram of splicing of unidirectional wood fiber paper provided by the present invention;
FIG. 15 is a schematic diagram of levelling by plastic forming provided by the present invention;
FIG. 16 is a preparation process of a unidirectional wood fiber paper prepreg provided by the present invention;
FIG. 17 is a schematic diagram of a single-surface film covering work provided by the present invention;
FIG. 18 is a schematic diagram of a unidirectional wood fiber paper prepreg prepared by a coating and scraping method provided by the present invention;
FIG. 19 is a schematic diagram of a principle of preparing a wood fiber paper reinforced composite with a unidirectional wood fiber paper prepreg provided by the present invention;
FIG. 20 is a cross-sectional schematic diagram of a wood fiber paper reinforced composite provided by the present invention;
FIG. 21 is a schematic diagram of preparing a wood fiber paper reinforced composite with waterproof performance by a unidirectional wood fiber paper prepreg provided by the present invention;
FIG. 22 is a flowchart of preparing a wood fiber paper reinforced composite with unidirectional wood fiber paper provided by the present invention;
FIG. 23 is an object diagram of a wood hollow tube provided by the present invention;
FIG. 24 is a photo of a unidirectional veneer with partial substances removed in a wet state in an Example 1 of the present invention;
FIG. 25 is a diagram of spontaneous transverse shrinkage of a unidirectional veneer with partial substances removed in an Example 1 of the present invention;
FIG. 26 is a curve diagram of a tensile stress strain test in a fiber direction of unidirectional wood fiber paper in an Example 1 of the present invention;
FIG. 27 is an object diagram of a unidirectional veneer only shrinking in a thickness direction after chemical treatment in a Contrast Example 1 of the present invention;
FIG. 28 is a photo of unidirectional wood fiber paper prepared with different stacking widths in an Example 10 of the present invention;
FIG. 29 is an overlook view of a wood fiber reinforced epoxy resin-based composite in an Example 11 of the present invention;
FIG. 30 is a side view of a wood fiber reinforced epoxy resin-based composite in an Example 11 of the present invention; and
FIG. 31 is a diagram of a transmittance test of unidirectional wood fiber paper in an Example 15 of the present invention.

### DETAILED DESCRIPTION OF THE PRESENT INVENTION

The technical solutions in the embodiments of the present invention will be clearly and completely described below in conjunction with the embodiments of the present invention, and it is obvious that the described embodiments are only part embodiments of the present invention, not all embodiments. Based on the embodiments in the present invention, all other embodiments obtained by those skilled in the art without making creative labor belong to the scope of protection of the present invention.

The present invention provides unidirectional wood fiber paper. The unidirectional wood fiber paper is formed by shrinking a unidirectional veneer with partial substances removed in at least one direction; partial the substances include lignin and hemicellulose; the thickness of the unidirectional wood fiber paper is smaller than or equal to 0.6 mm; the thickness of the unidirectional wood fiber paper is less than that of the unidirectional veneer; and the apparent thickness of the unidirectional wood fiber paper under a pressure not larger than 0.005 MPa is not greater than 4 times of the average thickness of the unidirectional wood fiber paper.

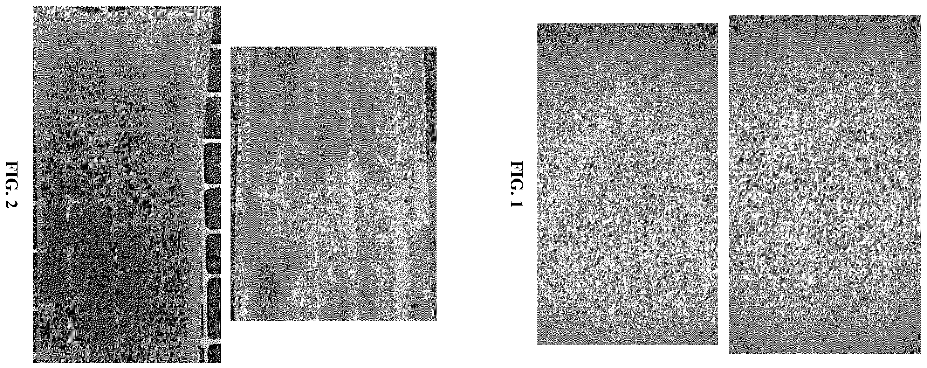

According to the present invention, the unidirectional wood fiber paper preferably includes wood fibers and/or fiber bundles; the wood fibers and/or the fiber bundles are integrally arranged or extend in a single direction at a microscopic level, specifically, 70% or more of the wood fibers and/or the fiber bundles are arranged or extend in the single direction at a microscopic level, and further, specifically, 80% or more of the wood fibers and/or the fiber bundles are arranged or extend in the single direction at a microscopic level; and with reference to FIG. 1, FIG. 1 is a microgram of unidirectional wood fiber paper.

In the composite, one way refers to that all or most fibers extend in the single parallel direction, and it can also be called as non-patterns. Because the wood fiber paper provided by the present invention is different from a conventional composite fiber cloth, the wood fiber paper does not have independent fiber characteristic. However, in microstructure, the wood fiber paper includes continuous wood fibers, and these wood fibers are connected by chemical components that are naturally generated in natural wood, so a physical form of single paper is presented in the macroscopic aspect; the arrangement of these continuous wood fibers conforms to the definition of the one way of a conventional composite, and therefore it is called as the unidirectional wood fiber paper in the present invention.

According to the present invention, the tensile strength of the unidirectional wood fiber paper in a direction parallel to the wood fibers is preferably 150-1000 MPa, and optionally, the tensile strength of the unidirectional wood fiber paper in the direction parallel to the wood fibers is 150 MPa, 200 MPa, 250 MPa, 300 MPa, 350 MPa, 400 MPa, 500 MPa, 600 MPa, 700 MPa, 800 MPa, 900 MPa, 1000 MPa or a range between any two of the above values; and the Young's modulus of the unidirectional wood fiber paper in the direction parallel to the wood fibers is preferably 20-80 GPa, and optionally, the Young's modulus of the unidirectional wood fiber paper in the direction parallel to the wood fibers is 20 GPa, 25 GPa, 30 GPa, 35 GPa, 40 GPa, 45 GPa, 50 GPa, 55 GPa, 60 GPa, 65 GPa, 70 GPa, 75 GPa, 80 GPa or a range between any two of the above values. Therefore, the wood fiber paper has good tensile strength and deformation resistance.

The unidirectional wood fiber paper provided by the present invention has high flatness, specifically, the apparent thickness of the unidirectional wood fiber paper under the pressure not greater than 0.005 MPa does not exceed 4 times of the average thickness of the unidirectional wood fiber paper.

Further, specifically, the apparent thickness of the unidirectional wood fiber paper under the pressure of 0.005 MPa preferably does not exceed 3 times of the average thickness of the unidirectional wood fiber paper.

Moreover, those skilled in the art can understand that the apparent thickness is related to pressure, and the greater the pressure, the smaller the apparent thickness, and the smaller the multiple between the apparent thickness and the average thickness, so the description of flatness can also be equivalent to the above description.

In a specific embodiment provided by the present invention, a flatness testing method includes: putting unidirectional wood fiber paper between two plane objects, and applying pressure to the plane to enable the unidirectional wood fiber paper to be subjected to a smaller pressure, in which, the flat wood fiber paper will incline to be fitted with the pressure-applied plane, and the difference value between the highest point and the lowest point of the pressed unidirectional wood fiber paper is the apparent thickness of the unidirectional wood fiber paper. The average thickness of the unidirectional wood fiber paper is the thickness average value, measured by a micrometer, of different position points of the unidirectional wood fiber paper.

According to the present invention, the unidirectional wood fiber paper is prepared by removing partial substances of the unidirectional veneer by chemical modification and shrinking in at least one direction; in the present application, unidirectional wood in the nature is utilized to produce the unidirectional wood fiber paper; fibers of the unidirectional wood grow along the longitudinal direction of a trunk, and the fibers are arranged closely and consistently to form a linear characteristic of parallel arrangement; the unidirectional wood is adopted as the feedstock, thus the common procedures of harvesting, retting, breaking, scotching, hackling, and laying and arranging for bast fibers at present are saved, the continuous and unidirectional arranged plant fibers are directly realized, the prepreg manufacturing cost can be greatly saved, and the excellent performance of the wood fiber prepreg can be improved by chemical treatment on the wood and subsequent operation. In the present invention, the thickness of the unidirectional veneer is less than or equal to 0.8 mm, further 0.05-0.8 mm, and optionally, the thickness of the unidirectional veneer can be 0.05 mm, 0.1 mm, 0.2 mm, 0.3 mm, 0.4 mm, 0.5 mm, 0.6 mm, 0.7 mm, 0.8 mm, 1 mm or a range between any two of the above values; in the embodiment provided by the present invention, the unidirectional veneer with the thickness of 0.28 mm is taken as an example for description; the areal density of the unidirectional veneer is preferably 20-450 g/m², more preferably 70-200 g/m²; and optionally, the areal density of the unidirectional veneer is 20 g/m², 50 g/m², 70 g/m², 80 g/m2, 90 g/m², 100 g/m², 110 g/m², 120 g/m², 130 g/m², 150 g/m², 180 g/m2, 200 g/m², 250 g/m², 280 g/m², 300 g/m², 320 g/m², 350 g/m², 400 g/m², 420 g/m², 450 g/m² or a range between any two of the above values; and generally, the thicker the unidirectional veneer, the greater the areal density; and the greater the areal density, the greater the thickness, and the greater the thickness, the greater the rigidity of the material, so that the material has better sound insulation.

According to the present invention, the weight loss of the unidirectional veneer with partial substances removed is preferably 10%-60% relative to the unidirectional veneer; optionally, the weight loss of the unidirectional veneer with partial substances removed relative to the unidirectional veneer is 10%, 20%, 25%, 30%, 35%, 40%, 45%, 50%, 55%, 60% or a range between any two of the above values; and the partial substances include lignin and hemicellulose.

According to the present invention, the shrinkage in the at least one direction includes transverse shrinkage and thickness shrinkage according to force decomposition.

In a specific embodiment provided by the present invention, the shrinkage in the at least one direction specifically involves shrinkage in at least two directions; the shrinkage includes the transverse shrinkage and the thickness shrinkage; and the shrinkage force directions of the transverse shrinkage and the thickness shrinkage are crossed.

In a specific embodiment provided by the present invention, the shrinkage is bidirectional shrinkage; and the bidirectional shrinkage includes transverse shrinkage and thickness shrinkage, namely the unidirectional veneer with partial substances removed is subjected to bidirectional shrinkage to obtain the unidirectional wood fiber paper.

In a specific embodiment provided by the present invention, the shrinkage percentage of the transverse shrinkage is preferably 2%-40%; optionally, the shrinkage percentage of the transverse shrinkage is 2%, 5%, 10%, 15%, 20%, 25%, 30%, 35%, 40% or a range between any two of the above values; and the transverse shrinkage rate is increased, and the tensile strength and modulus of the finally obtained unidirectional wood fiber paper in the direction vertical to the fiber direction have the increasing tendency; and therefore, it can be selected according to needs.

In a specific embodiment provided by the present invention, the shrinkage percentage of the thickness shrinkage is preferably 20-90%, more preferably 20-86%; optionally, the shrinkage percentage of the thickness shrinkage is 20%, 25%, 30%, 35%, 40%, 45%, 50%, 55%, 60%, 65%, 70%, 75%, 80%, 85%, 86%, 90% or a range between any two of the above values; the higher the thickness shrinkage rate is, the thinner the unidirectional wood fiber paper is; the tensile strength and modulus in the fiber direction have the increasing tendency; and it can be selected according to needs.

In a specific embodiment provided by the present invention, the shrinkage force directions of transverse shrinkage and thickness shrinkage are crossed; and the crossed angle is preferably 60-90°.

In a specific embodiment provided by the present invention, the unidirectional veneer with partial substances removed includes wood fibers and/or fiber bundles; the wood fibers and/or the fiber bundles are integrally arranged or extend in a single direction at a microscopic level, and the force is in a direction intersected with the extending direction of the wood fibers and/or fiber bundles in the plane; the in-plane intersection is also in direction vertical to the fiber direction in the macroscopic aspect; the shrinkage force of transverse shrinkage is the force in the direction parallel to the unidirectional veneer; and/or, the shrinkage force of thickness shrinkage is the force in the direction vertical to the unidirectional veneer; and the force in the horizontal direction and the force in the vertical direction are original applied forces independently from each other, and/or, forces produced by a force after decomposed or forces after composed.

Both the thickness and density of the unidirectional wood fiber paper obtained by shrinkage in at least two directions will be changed; the thickness of the unidirectional wood fiber paper is smaller than that of the unidirectional veneer, and is preferably 10-80% of the thickness of the unidirectional veneer; and optionally, the thickness of the unidirectional wood fiber paper can be 10%, 15%, 20%, 25%, 30%, 35%, 40%, 45%, 50%, 55%, 60%, 65%, 70%, 75%, and 80% of the thickness of the unidirectional veneer or a range between any two of the above values.

In a specific embodiment provided by the present invention, the thickness of the unidirectional wood fiber paper is smaller than or equal to 0.6 mm; and optionally, the thickness of the unidirectional wood fiber paper is 0.01 mm, 0.05 mm, 0.1 mm, 0.15 mm, 0.2 mm, 0.25 mm, 0.35 mm, 0.4 mm, 0.45 mm, 0.5 mm, 0.55 mm, and 0.6 mm or a range between any two of the above values.

In a specific embodiment provided by the present invention, the density of the unidirectional wood fiber paper is 0.8-1.5 g/cm³; and optionally, the density of the unidirectional wood fiber paper is 0.8 g/cm³, 0.9 g/cm³, 1.0 g/cm³, 1.1 g/cm³, 1.2 g/cm³, 1.3 g/cm³, 1.4 g/cm³, and 1.5 g/cm³ or a range between any two of the above values.

In a specific embodiment provided by the present invention, the areal density of the unidirectional wood fiber paper is 20-400 g/m²; and optionally, the areal density of the unidirectional wood fiber paper is 20 g/m², 25 g/m², 30 g/m², 40 g/m², 50 g/m², 60 g/m², 70 g/m², 80 g/m², 90 g/m², 100 g/m², 110 g/m², 120 g/m², 130 g/m², 150 g/m², 160 g/m², 170 g/m², 180 g/m², 190 g/m², 200 g/m², 220 g/m², 250 g/m², 280 g/m², 300 g/m², 320 g/m², 350 g/m², 380 g/m², 400 g/m² or a range between any two of the above values.

According to the present invention, the feedstock of the unidirectional wood fiber paper is natural wood, and it is 100% natural material.

According to the present invention, the unidirectional wood fiber paper can be spliced to infinite width and length theoretically, specifically, the length of a single piece of non-spliced unidirectional wood fiber paper is preferably 0.1-5 m, more preferably 0.1-3 m; and the width of the single piece of non-spliced unidirectional wood fiber paper is preferably 0.01-1 m.

According to the present invention, the water content of the unidirectional wood fiber paper is preferably below 10 wt%; and the unidirectional wood fiber paper does not wrinkle when being placed at room temperature.

According to the present invention, all and/or partial the unidirectional wood fiber paper has smooth plastic feeling; further, when the thickness of the unidirectional wood fiber paper is less than 0.15 mm, partial area has a light transmission effect, specifically, the light transmittance of all and/or partial the unidirectional wood fiber paper is preferably 2-70%; and with reference to FIG. 2, FIG. 2 is an object figure of unidirectional wood fiber paper provided by the present invention.

The present invention also provides a preparation method for the unidirectional wood fiber paper, which includes the following steps: S1) chemically modifying a unidirectional veneer to obtain a unidirectional veneer with partial substances removed; and S2) performing shrinkage treatment on the unidirectional veneer with partial substances removed in at least one direction to obtain the unidirectional wood fiber paper; and the shrinkage includes transverse shrinkage and thickness shrinkage according to force decomposition.

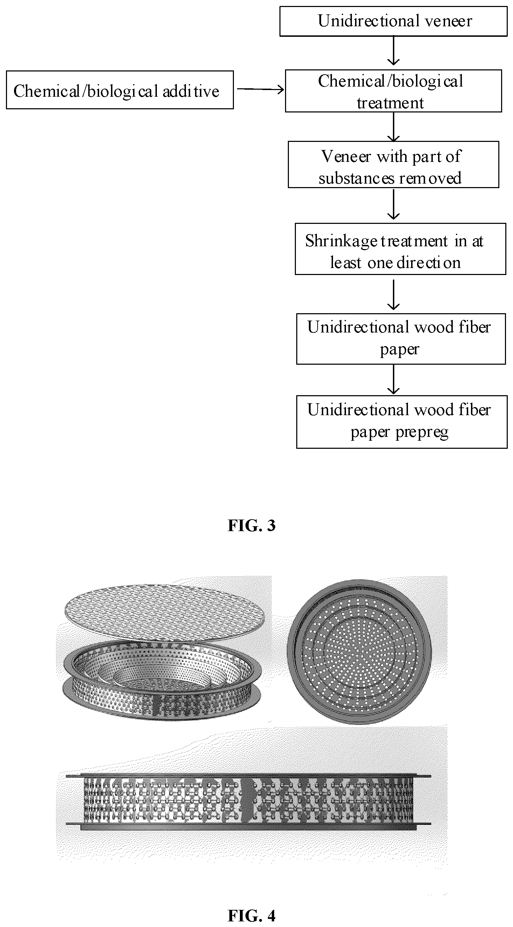

With reference to FIG. 3, FIG. 3 is a schematic diagram of a preparation flow of unidirectional wood fiber paper provided by the present invention

The present invention does not have special restrictions on the source of all feedstocks, which are commercially available.

In the present invention, the unidirectional veneer can be of the type well known to those skilled in the field, and there is no special restriction, and in the present invention, it includes but is not limited to walnut, oak, basswood, red sandalwood, ebony, teak, rosewood, catalpa wood, Microberlinla sp, cherry wood, phellem, poplar, beech, Cassia bakeriana Craib, pinus sylvestris, maple, white wax wood and the like; the unidirectional veneer is a natural veneer, which can avoid that artificial scientific wood doped with too many polymer materials is not environmentally friendly and its structure will be separated in subsequent chemical reaction. The material of the natural veneer is green and environment-friendly, and cellulose, hemicellulose and lignin are mutually crosslinked in a naturally formed structure, so that the structural integrity can be kept in the subsequent chemical reaction. The wood fibers of the unidirectional veneer are regularly arranged, basically all the wood fibers are arranged in the same direction, and the surface textures are also in the same direction, so the veneer has high anisotropy. The reason for selecting the unidirectional veneer rather than the veneer with other fiber directions is that relatively high internal stress will be released in the subsequent process, only the unidirectional veneer can maintain relatively good overall size consistency, and moreover, defects are not easily caused. In subsequent chemical reaction process, some substances in the wood will be removed from the structure, consequently, the wood will have an internal stress for shrinkage after the reaction. The removed substances are mainly concentrated among the wood fibers, so the internal stress release of the unidirectional veneer after the chemical reaction will be concentrated in one direction, the veneer will uniformly shrink from outside to inside in the direction vertical to the wood fibers, and therefore, the veneer does not easily have defects. If other non-unidirectional veneer with irregular fiber arrangement is used, the internal stress will be released in different directions, it is easy to have excessive internal stress in local area, and defects such as fractures will occur, resulting in waste. The thickness of the unidirectional veneer is less than or equal to 0.8 mm; in the embodiment provided by the present invention, the unidirectional veneer with the thickness of 0.28 mm is taken as an example for description; the size of maximum surface of the unidirectional veneer is preferably 3000 x 500 mm, and any size can be obtained by cutting within this size range; and the areal density of the unidirectional veneer is preferably 20-450 g/m².

The unidirectional veneer is chemically modified to obtain the unidirectional veneer with partial substances removed; the pH value of a modification solution for chemical modification is preferably 12-14; the modification solution for chemical modification preferably includes an alkaline substance, a sulfonating agent and water; the alkaline substance is an alkaline substance well known to those skilled in the art, and there is no special limitation, and in the present invention, it preferably includes but is not limited to one or more of sodium hydroxide, potassium hydroxide, sodium bicarbonate and potassium bicarbonate; the concentration of alkaline substance in the modification solution is preferably 0.01-5 kg/L, more preferably 0.05-3 kg/L, and still more preferably 0.1-2 kg/L; in some embodiments provided by the present invention, the concentration of the alkaline substance in the modification solution is specifically 0.1 kg/L, 0.05 kg/L or 0.145 kg/L; the sulfonating agent is a sulfonating agent well known to those skilled in the art, and there is no special limitation, and in the present invention, it preferably includes but is not limited to one or more of sulfite, chlorosulfonic acid, hydroxymethylsulfonate, sulfuryl chloride and sulfamic acid; the sulfite is preferably sodium sulfite; the concentration of the sulfonating agent in the modification solution is preferably 0.01-5 kg/L, more preferably 0.01-3 kg/L, and still more preferably 0.01-1 kg/L; in some embodiments provided by the present invention, the concentration of the sulfonating agent in the modification solution is specifically 0.05 kg/L, 0.075 kg/L or 0.072 kg/L; the concentration of the sulfonating agent in the modification solution can be correspondingly increased with the increase of the volume of the reaction solution, so as to make up for the decrease in mass transfer caused by the increase in the scale of chemical reaction. The modification solution can be in any volume, depending on the output demand and the reactor equipment specifications, including but not limited to 500 mL, 2 L, 4 L, 20 L, 100 L, 500 L, 1000 L, 2000 L, 5000 L, 8000 L, 10000 L, etc.; and the material ratio of the unidirectional veneer to the modification solution for chemical modification is preferably 4.6-184 cm³:1 L. The higher the material ratio, the higher the output of a single reaction, so it is generally necessary to increase the material ratio in the reaction as much as possible, but it is also necessary to comprehensively consider the difficulty of mass transfer and the excessive accumulation of materials in a reactor. In the process of reaction, the alkaline substance will react with lignin, hemicellulose and cellulose in the unidirectional veneer; taking the alkaline substance as sodium hydroxide and the sulfonating agent as sodium sulfite as an example, hemicellulose may react with sodium hydroxide to generate sodium hemicellulose (as shown in a reaction formula 1), and lignin may react with sodium hydroxide and sodium sulfite to generate sodium lignosulfonate (as shown in a reaction formula 2 and a reaction formula 3). By-products of these reactions will be separated from the unidirectional veneer structure and dissolved or suspended in the reaction solution. If the material ratio is too high, the reaction mass transfer efficiency will be reduced, and the reaction by-products are difficult to be uniformly dispersed in the system, which will lead to the reduction of the reaction rate in the local area, resulting in the reduction of the property uniformity of the unidirectional veneer after the reaction, as well as influence on the subsequent process stability and final product performance. Moreover, the excessive accumulation of materials in the reactor will also increase the mutual friction of the unidirectional veneers or the friction with the internal structure of the reactor, resulting in the damage to the unidirectional veneer.

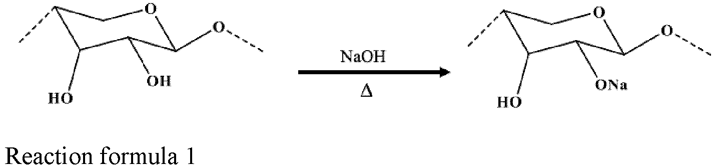

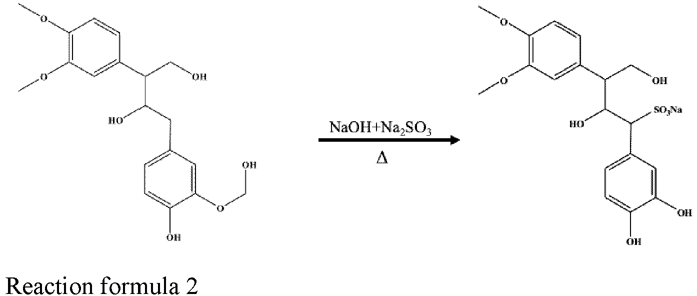

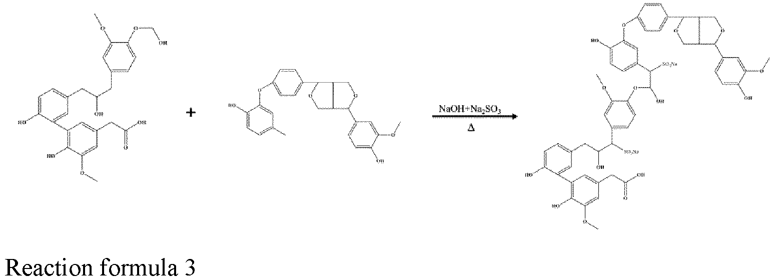

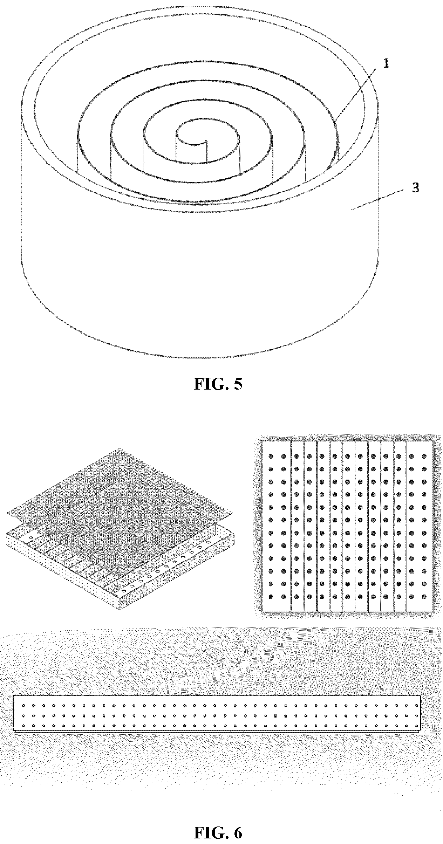

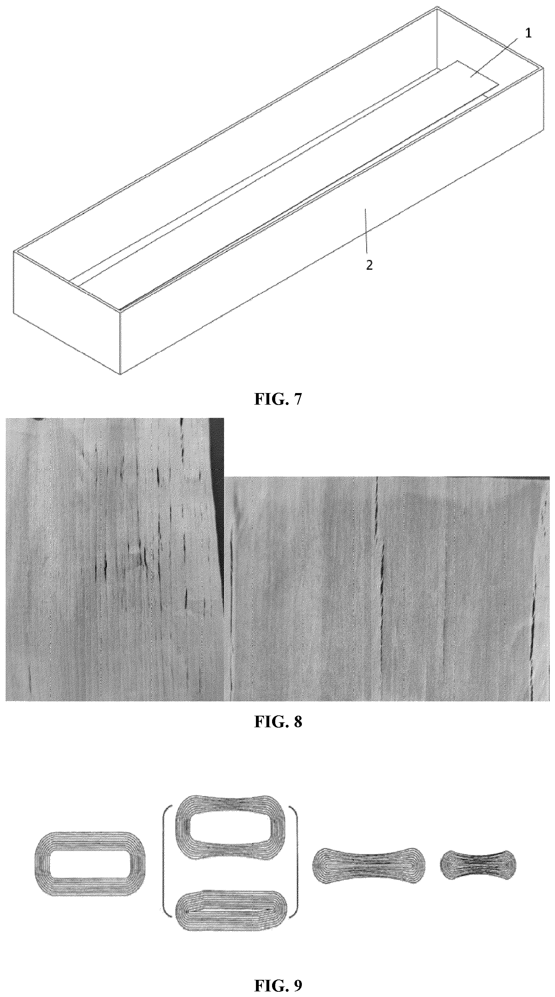

For small-scale reactions below 5 L, mass and heat transfer in the system is relatively easy, and the number of unidirectional veneers is relatively small, and the whole veneer can be curled and attached to the wall of the reactor. For reactions above 5 L, due to the large scale of the reaction, the mass and heat transfer rate in the system will be reduced, and the number of unidirectional veneers is large, so it is necessary to put the unidirectional veneer into the reactor in advance. Moreover, it is needed to add a step of pre-layering to maximize the use of the internal space of the reactor, and the unidirectional veneer is evenly arranged in all parts in the reactor; in addition, the unidirectional veneer in a single area can also be controlled to a certain number by this partitioning, thus reducing the damage to the unidirectional veneer caused by mutual friction and improving the mass transfer effect. The unidirectional veneer is preferably placed in a material pot for chemical modification; the material pot includes a frame body, a partition plate and a frame cover; the partition plate is arranged in the frame body; and the side wall of the frame body, the bottom of the frame body, the partition plate and the frame cover are all provided with holes. In a specific embodiment provided by the present invention, the material pot is a cylindrical material frame; a plurality of partition plates are provided; the plurality of partition plates are arranged in concentric circles within the frame body, either at the same intervals or at different intervals. In a specific embodiment provided by the present invention, the material pot is a cuboid material frame; a plurality of partition plates are provided; and the plurality of partition plates are arranged in parallel within the material pot, either at the same interval or at different intervals. In the present invention, the unidirectional veneer can be pre-layered with the material pot which is of an upper and lower overlapped type, as shown in FIG. 4 and FIG. 5. FIG. 4 is a structural schematic diagram of a material pot for a vertical reactor, and FIG. 5 is a schematic diagram of a unidirectional veneer placed in a vertical reactor, in which, 1 is the unidirectional veneer, 3 is the vertical reactor, and the main body structure of the material pot is formed by a mesh plate with a certain hole. The diameter of the hole cannot be too small to affect the mass transfer effect, nor too large to lead to scratches on the veneer and reduction of the structural strength. Generally, the diameter range of the hole is 3-5 mm, and the overall hole density of the hole is 4×10⁵-3.5×10⁵ holes/m³, which is determined according to the actual working conditions and equipment conditions. The thickness of the corresponding mesh plate is needed to meet the structural stability of the frame body after loading the material, and a slab with thickness of 1-5 mm is generally selected according to the size of the material pot. The height of a single layer is mainly determined by the width of the veneer to be treated, which is generally 10-30 cm. The radius of the outermost layer and the radius of the innermost layer of the material pot depend on the specific reactor structure and the quantity of materials, and the spacing in the frame is not equidistant, generally increases from the inside to the outside in sequence, and the specific increase depends on the thickness and quantity of the veneer. The basic criterion of this design is that when loading the veneer, it is easy to operate and will not damage the veneer. FIG. 6 is a structural schematic diagram of a material pot for a horizontal reactor provided by the present invention, and the overall appearance size of the material pot depends on the structure of the horizontal reactor, and the height of the single layer depends on the width of the material, and the thickness depends on the amount of material filled and the size of the material pot. The material pot is needed to be designed as a porous structure, the diameter range of the hole is generally 3-5 mm, and the hole density of the overall hole is 6.8 × 10⁵-5.0×10⁵ holes/m³. The internal partition plate is a perforated mesh plate with thickness of 2 mm, and the partitioning distance can be equidistant, and the distance value is added by 1-5 cm from the width of the veneer. This allows the material to move freely inside and outside the material pot, and the size of the holes is as large as possible, so that the unidirectional veneer can be effectively layered without affecting mass transfer. The material pot is needed to be designed to be close to the inner diameter of the reactor, thus the stacked multi-layer material frame can maximize the use of the space in the reactor, and the material of the material pot is needed to be alkali and temperature resistant materials; and FIG. 7 is a schematic diagram of a unidirectional veneer placed in a horizontal reactor, in which, 1 is the unidirectional veneer, and 2 is the horizontal reactor.

The reactor can be vertical or horizontal, heating in the reactor can be in any mode as long as the temperature precision in the system can be controlled to be ±10°C. For a large-volume reactor, mass transfer can be improved by adding methods such as stirring, solution backflow, overall rotating of the reactor, and pumping of a solution by an external circulating pump. In the present invention, there are two choices for the reaction temperature and pressure of chemical modification: one is that heating is performed under normal pressure until water is in a boiling state, but it is needed to add a condensation backflow module, which leads to the increase in the reaction energy consumption, in addition, the reaction can be performed completely only when the reaction time under normal pressure, namely, the maintaining time under the target temperature/pressure is 24-72 h; in some embodiments provided by the present invention, the reaction time under normal pressure can be specifically 48 h; the other one is that heating is performed in a closed high-pressure system until the temperature exceeds the boiling temperature of water, namely the target temperature is preferably 100-150°C, more preferably 110-150°C, still more preferably 120-130°C and most preferably 125°C, and the whole system forms a high-pressure system, thus the condensation backflow module is not need to be added, the reaction can be completely performed when the reaction time, namely the maintaining time is reduced to be 1-12 h, more preferably 3-10 h, still more preferably 4-8 h, and most preferably 5-8 h; and therefore, the energy consumption of the reaction can be greatly reduced, and the process cost of chemical reaction is reduced. In addition, the pumping capacity of a material pump is 1.4-3.5 t/h. The optimal reaction temperature depends on wood species and the reactor scale, different wood species have slight temperature window differences due to different chemical components, and the larger the reactor scale is, the higher the reaction temperature is, so that the reduction in heat transfer and mass transfer is compensated. Generally, the higher the reaction temperature is, the higher the reaction rate is, but cellulose will be gradually hydrolyzed at 150°C; and because the mechanical property of the cellulose is relatively high, and it is needed to be reserved as much as possible, the reaction temperature is needed to be set to be below 150°C. In some embodiments provided by the present invention, the temperature of chemical modification in the closed high-pressure system, namely the target temperature, is specifically 125°C, 116°C or 130°C; in some embodiments provided by the present invention, the target time of chemical modification in the closed high-pressure system is specifically 6 h, 8 h or 6.5 h; when chemical modification is performed in the closed high-pressure system, the target pressure of chemical modification is preferably 0.07-1.9 MPa; the temperature rise rate in chemical modification is not specially limited in the present invention, and the temperature rise rate in chemical modification performed under normal pressure or in the closed high-pressure system can be specifically 0.2-5°C/min, more preferably 0.5-5°C/min. In some embodiments provided by the present invention, the temperature rise rate can be specifically 3°C/min, 2.5°C/min, 5°C/min, 2°C/min, 0.5°C/min or 0.2°C/min; when the temperature of the system reaches and is stabilized at the target temperature, the reaction in the closed high-pressure system is needed to maintain at the target temperature for 1-12 h or maintain at the target temperature for 24-72 h under normal pressure, and then cooling is started. Because the modified unidirectional veneer will recombine intermolecular hydrogen bonds in the cooling process and start crystallization at the same time, the cooling method may have a significant influence on the final performance. If the cooling rate is too high, the molecular chain of the unidirectional veneer with partial substances removed will be fixed too early, consequently, the intermolecular acting force is not completely established, resulting in low crystallinity and large crystalline particles, which all have negative effects on the performance. Therefore, in the present invention, after chemical modification is finished, the reaction liquid preferably exchanges heat with the external environment at room temperature to slowly cool the reaction liquid. This cooling mode can promote the establishment of intermolecular acting force so as to obtain crystals with high crystallinity and large grain size. Specifically, this mode includes water cooling or air cooling, and the further, specifically, this cooling mode includes indirect water cooling, air cooling or direct water cooling; the cooling rate is preferably 0.2-10°C/min, more preferably 1-10°C/min; and in some embodiments provided by the present invention, the cooling rate is specifically 0.2°C/min, 1°C/min, 0.5°C/min, 2°C/min or 3°C/min.

After the temperature is decreased to reach operation temperature (such as 60°C), the unidirectional veneer with partial substances removed is preferably washed and dried; specifically, the reactor is opened to take out the unidirectional veneer with partial substances removed, or the material pot loaded with the unidirectional veneer with partial substances removed is taken out. The obtained materials are put into water for washing wholly, or the material pot loaded with the materials is put into water for washing wholly. The washing is to remove chemical substances remained on the surface, and meanwhile, sodium cellulose which is possibly generated in the reaction process can react back to cellulose, so that pure natural chemical components can be kept in the wood. The washing processes can be carried out for a plurality of times according to the condition of the materials. After being washed, the materials are dried to obtain the unidirectional veneer with partial substances removed; the materials can be dried naturally or can be put into a drying oven to be dried in an accelerated manner; compared with the unidirectional veneer, the mass of the unidirectional veneer with partial substances removed is reduced by 10%-60%, further reduced by 35%-55%; and in some embodiments provided by the present invention, compared with the unidirectional veneer, the mass of the unidirectional veneer with partial substances removed is specifically reduced by 50%, 42%, 46.8%, 49.1%, 49% or 48.2%.

In the chemical modification process, the mass of unidirectional veneer is reduced by 10%-60%, thus a large number of clearances will be generated in the microstructure, and the unidirectional veneer with partial substances removed will have good plastic deformation capacity due to these clearances and can be easily compressed to be smaller under an external force. Moreover, the reduction of mass is caused by that a large amount of lignin and hemicellulose in the unidirectional veneer are removed, and the proportion of cellulose is increased in the aspect of overall components. Because the cellulose in the three main components of the unidirectional veneer has the best mechanical property, the material has the potential enhancement possibility by proportion adjustment. The plastic deformation capacity of wood without being modified is poor, and if the wood without being modified is subjected to remarkable plastic deformation, it is generally needed to carry out water vapor heating and humidifying treatment for 2-24 h to achieve sufficient softening effect. The shrinkage and densification process is a key process, it means that if the material is needed to meet the requirement for achieving the volume compression effect within a short time, the material is needed to have very good plastic deformation capacity, which is not achieved by the wood without being modified. Moreover, if the material subjected to chemical treatment is needed to be kept complete and flat, it is needed to control the reaction degree in the chemical reaction process. If the reaction is excessive, a large number of wrinkles will be generated on the veneer, consequently, levelling cannot be achieved; and if the reaction is insufficient, the compression degree of the unidirectional veneer will be low, and consequently, the mechanical property of the densified material is poor.

In the present invention, the removal ratio of lignin is 20%-80% and the removal ratio of hemicellulose is 30%-80% after unidirectional veneer is chemically modified, and specifically, the removal ratio of the hemicellulose and the lignin is approximately in a positive correlation with the temperature and time within the temperature and time range of chemical modification provided by the present invention.

The unidirectional veneer with partial substances removed is subjected to shrinkage treatment in the at least one direction; the shrinkage treatment includes transverse shrinkage and thickness shrinkage according to force decomposition, and the transverse shrinkage and the thickness shrinkage mean that shrinkage will occur in both the transverse direction and thickness direction which are vertical to the fiber direction of the unidirectional wood fiber paper to achieve a densification effect. The number of times of the shrinkage treatment can be selected according to the direction of force, and the transverse (horizontal direction) shrinkage and the vertical (thickness direction) shrinkage can be actually realized only through the force decomposition.

In a specific embodiment provided by the present invention, the shrinkage treatment includes the transverse shrinkage treatment and the thickness shrinkage treatment, namely bidirectional shrinkage treatment; and the force of the transverse shrinkage treatment is intersected with the force of the thickness shrinkage treatment. The bidirectional shrinkage of the wood fiber paper can be realized by different devices respectively, and the shrinkage in the two directions can also be simultaneously or alternately realized in one device.

When the thickness of the processed feedstock unidirectional veneer is below 0.8 mm, transverse shrinkage is necessary. In a small thickness range, the arrangement density of the cellulose and the distribution of the lignin and the hemicellulose in the transverse direction of any position of the unidirectional veneer are not uniform, and the distribution of reaction media in chemical or biological treatment is relatively more uniform. If the cellulose in a certain area in the transverse direction is less, the lignin and the hemicellulose will be removed more, more connecting substances are inevitably lost in partial the area by chemical modification, and the cellulose structure of the area is in a falling apart state. The unidirectional shrinkage is carried out in the thickness direction, cracks are easily generated in the area due to the lack of necessary transverse connecting force, and an object diagram is shown in FIG. 8.

According to the present invention, the transverse shrinkage treatment is preferably to apply an external mechanical force and/or perform dehydration spontaneous shrinkage in the transverse direction; and the external mechanical force applied in the transverse direction is in a direction intersected with the extending direction of wood fibers and/or fiber bundles of the unidirectional veneer with partial substances removed in the plane.

The method for applying the external mechanical force in the transverse direction is a method well known to those skilled in the art, there is no special limitations, and methods with parameters such as pressure meeting the process requirements are all available. For example, a film material that can perform transverse shrinkage is used and attached to the surface of unidirectional veneer with partial substances removed, and after pressure is applied, the film material is removed; when controlling the film material to perform transverse shrinkage, the friction force between the film and the surface of the unidirectional veneer with partial substances removed will lead to the transverse shrinkage of the unidirectional veneer with partial substances removed; in this process, the tension of the film material influences the transverse shrinkage degree, specifically, the tension of the film material is preferably controlled to achieve the equivalent transverse shrinkage pressure of 0.001-1.5 MPa, more preferably 0.01-1.5 MPa; optionally, the tension of the film material is controlled to achieve equivalent transverse shrinkage pressure of 0.001 MPa, 0.002 MPa, 0.005 MPa, 0.01 MPa, 0.05 MPa, 0.08 MPa, 0.1 MPa, 0.2 MPa, 0.5 MPa, 0.8 MPa, 1.0 MPa, 1.2 MPa, 1.4 MPa, 1.5 MPa or a range between any two of the above values; moreover, the friction force on the surface, away from the film material, of the unidirectional veneer with partial substances removed may also influence the transverse shrinkage of the unidirectional veneer with partial substances removed, and therefore the lower the roughness of the contact side of the surface, away from the film material, of the unidirectional veneer with partial substances removed is, the better the effect is; specifically, it preferably makes contact with the surface having roughness smaller than or equal to Ra6.3, and optionally, the roughness of the contact side is Ra0.0063, Ra0.025, Ra0.05, Ra0.1, Ra0.2, Ra0.4, Ra0.8, Ra1.6, Ra3.2 or Ra6.3; and in addition, the external mechanical force can also be achieved by mechanical force, such as roller rubbing, and direct pressure applying methods. The pressure of applying the external mechanical force in the transverse direction is preferably 0.001-1.5 MPa, more preferably 0.01-1.5 MPa; and optionally, the pressure of applying the external mechanical force in the transverse direction is 0.001 MPa, 0.002 MPa, 0.005 MPa, 0.01 MPa, 0.05 MPa, 0.08 MPa, 0.1 MPa, 0.2 MPa, 0.5 MPa, 0.8 MPa, 1.0 MPa, 1.2 MPa, 1.4 MPa, 1.5 MPa or a range between any two of the above values.

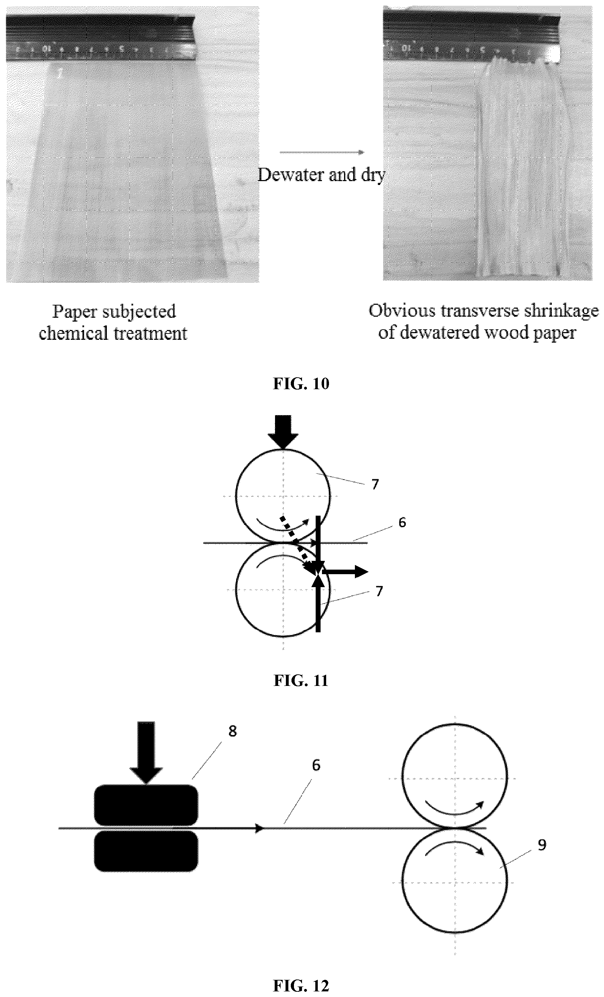

The transverse shrinkage can be implemented by spontaneous acting force in the unidirectional veneer with partial substances removed, namely dehydration and spontaneous shrinkage; thin wood fiber paper will be subjected to spontaneous transverse shrinkage during dehumidification, as shown in FIG. 9, FIG. 9 is a schematic diagram of sinking and shrinkage of a tube cavity of wood fiber paper pipe in spontaneous transverse shrinkage, its principle is that partial lignin and hemicellulose which support the tube cavity in the chemically treated veneer with partial substances removed are removed, a large number of clearances are contained in the microstructure, and the clearances can be easily filled with water. In addition, because cellulose in the continuous veneer plays a role of a main component, and there are a large number of hydroxyl groups in the chemical structure of cellulose, and it is a hydrophilic material, water molecules are promoted to enter the clearances of the microstructure. During dehydration, water is removed from the clearances, the clearances will disappear due to capillary force, thus the distance between cellulose microfibers is rapidly reduced, and hydrogen bonds between the microfibers are reestablished; and the spontaneous transverse shrinkage effect is achieved by shrinkage of the structure and establishment of chemical bonds. Macroscopically, wrinkles are generated on the wood fiber paper, so the width in the transverse direction is reduced, and the compactness is increased, as shown in FIG. 10.

In the present invention, the transverse shrinkage can be carried out under a normal temperature condition or a high temperature condition; specifically, the temperature of transverse shrinkage treatment is preferably 15°C-150°C, more preferably 25 °C-130°C; optionally, the temperature of the transverse shrinkage treatment is 20°C, 25°C, 30°C, 50°C, 70°C, 80°C, 90°C, 100°C, 110°C, 120°C, 130°C or a range between any two of the above values; the time of the transverse shrinkage treatment is preferably 1 s to 4 min; optionally, the time of the transverse shrinkage treatment is 1 s, 10 s, 30 s, 1 min, 2 min, 3 min, 4 min or a range between any two of the above values; the shrinkage percentage of a unidirectional veneer feedstock subjected to the transverse shrinkage treatment is preferably 2%-40%; and optionally, the shrinkage percentage of the transverse shrinkage treatment is 2%, 5%, 10%, 15%, 20%, 25%, 30%, 35%, 40% or a range between any two of the above values.

In a specific embodiment provided by the present invention, the transverse shrinkage treatment is specifically spontaneous transverse shrinkage, specifically, the unidirectional veneer with partial substances removed in a wet state is dried to spontaneously achieve the spontaneous transverse shrinkage effect, and after one-time or multi-time spontaneous transverse shrinkage, and the unidirectional veneer with partial substances removed is filled with water again, the transverse shrinkage in the direction vertical to the fiber direction is obvious, so that the transverse tensile property is improved.

A normal wood slab can be softened with steam and then subjected to hot-pressing compression densification, but in the densification process, it is needed to apply a large pressure to the wood slab for a long time; the unidirectional veneer in the present invention is thin, and is prone to cracking when being directly subjected to hot pressing, so the obtained densification effect is limited. After the veneer is chemically modified, its mass will be decreased by 35%-55%, and a large number of cavities are formed inside. Because the removed chemical component is hydrophobic lignin, the hydrophilicity of the modified unidirectional veneer with partial substances removed is remarkably improved, the internal cavities can be rapidly filled with water molecules, thus the overall structure is soft, and densification is easily conducted through natural water loss; and moreover, the energy consumption in the densification process is low, the time is short, and batch production is facilitated.

In the process of spontaneous transverse shrinkage, external mechanical force is not needed at all, the modified unidirectional veneer with partial substances removed can realize the effect of spontaneous transverse shrinkage through the microstructure water filling-dewatering process, and this process is also called as wood keratinization. Its principle is that there are a large number of clearances in the microstructure of the chemically modified wood, and these clearances are easily filled with water. In addition, because cellulose in continuous veneer play a role of a main component, there are a large number of hydroxyl groups in the chemical structure of cellulose, and it is a hydrophilic material, water molecules are promoted to enter the clearances of the microstructure. In the water filling process, the clearances between cellulose microfibrils are obviously expanded. In the subsequent drying process, water will be removed from the clearances, the clearances will disappear due to capillary force, the distance between the cellulose microfibrils will be rapidly reduced, hydrogen bonds between the microfibrils will be reestablished, the effect of spontaneous transverse shrinkage, especially transverse shrinkage of the veneer vertical to the fiber in the axial direction, is achieved through shrinkage of the structure and establishment of chemical bonds, and the densification effect is more obvious.

According to the present invention, in the spontaneous transverse shrinkage process, the densification effect can be achieved completely by chemical and physical changes spontaneously generated by the modified unidirectional veneer with partial substances removed in the drying process without using any external pressure device. Specifically, the spontaneous transverse shrinkage is to dry the unidirectional veneer with partial substances removed in the wet state, that is, the spontaneous transverse shrinkage includes water filling treatment and dehydration treatment; the water filling treatment is to make the unidirectional veneer with partial substances removed in the wet state; the water filling treatment is to preferably make the water content reach 60-120 wt%; optionally, the water filling treatment makes the water content reach 60 wt%, 80 wt%, 100 wt%, 120 wt% or a range between any two of the above values; the dehydration treatment includes natural drying and/or heating drying; when the dehydration treatment is performed in the natural drying way in the environment, the environmental humidity in the natural drying is preferably less than 50% RH, otherwise, a large amount of water is still reserved in the structure of the unidirectional veneer with partial substances removed after drying; if the dehydration treatment is performed in the heating drying way, the time of the dehydration treatment can be reduced, the process time is decreased, and the unidirectional veneer with partial substances removed can be dried to reach the water content below 10 wt% to the maximum extent, so that the densification effect is improved; the dehydration treatment preferably makes the water content reach 2-20 wt%; and optionally, the dehydration treatment makes the water content reach 2 wt%, 5 wt%, 10 wt%, 15 wt%, 20 wt% or a range between any two of the above values; in the present invention, there is no special requirement on the drying temperature and drying time in the spontaneous transverse shrinkage process, as long as the target water content is achieved finally. The process of spontaneous transverse shrinkage can be performed once, or repeated for 2-10 times, preferably 2-6 times. The process of repeated spontaneous transverse shrinkage is that after one time of spontaneous transverse shrinkage is finished, the unidirectional veneer with partial substances removed is refilled with water, and then the same spontaneous transverse shrinkage process is performed. The repeated spontaneous transverse shrinkage can make the material have a better densification effect because the spontaneous transverse shrinkage process is uncontrollable, intermolecular force in the unidirectional veneer structure with partial substances removed cannot be established perfectly after one time of spontaneous transverse shrinkage is finished. After one or more times of spontaneous transverse shrinkage, the unidirectional veneer with partial substances removed is refilled with water, the unidirectional veneer with partial substances removed vertical to the fiber direction will have certain shrinkage in the transverse width, and the transverse fiber bonding force is improved, which indicates that partial irreversible transverse shrinkage densification effect is realized.

According to the present invention, the thickness shrinkage treatment is to apply a mechanical pressure in the thickness direction, and the specific method is a method for applying an external mechanical pressure in the thickness direction of the chemically treated veneer to cause the shrinkage of the veneer in the thickness direction, moreover, methods with pressure and other parameters meeting the process requirements are basically avaliable, and the used devices include but not limited to a flat press, a plastic vacuum forming machine, a hot press roll, a cold press roll, a continuous flat press, a continuous belt press and the like; and by applying the external mechanical pressure, the flatness of the veneer is improved, and moreover, and the thickness is reduced under the action of force, and excessive water is extruded out, thus obtaining the flat and dense unidirectional wood fiber paper with the water content less than 30%. Moreover, the thickness shrinkage is performed on a single or stacked veneers; that is, the thickness shrinkage treatment can be performed on a single veneer or a plurality of stacked veneers, and the process efficiency is higher when the thickness shrinkage is performed on the plurality of stacked veneers. Due to the influence of the process, the number of the stacked veneers meets 2-30 veneers/pile, more preferably 3-20 veneers/pile. The pressure of thickness shrinkage treatment is preferably 0.01-80 MPa, more preferably 0.1-60 MPa, and still more preferably 3-10 MPa; optionally, the pressure of the thickness shrinkage treatment is 1 MPa, 2 MPa, 3 MPa, 4 MPa, 5 MPa, 6 MPa, 8 MPa, 10 MPa, 12 MPa, 15 MPa, 20 MPa, 25 MPa, 30 MPa, 35 MPa, 40 MPa, 45 MPa, 50 MPa, 55 MPa, 60 MPa or a range between any two of the above values; and according to a pressure and area calculation formula, under a condition that the required pressure is fixed, the more the number of the piles of the unidirectional veneer with partial substances removed is, the higher the gauge pressure of the flat press is. If the flat press is used, that the unidirectional veneer with partial substances removed is easily broken due to instant high pressure is to be taken into consideration, it is needed to slowly increase the pressure to reach the target pressure. The thickness shrinkage treatment can be carried out at normal temperature or high temperature, and the specific process temperature range is preferably 15-150°C, and more preferably 25-130°C; optionally, the temperature of the thickness shrinkage treatment is 15°C, 25°C, 35°C, 50°C, 80°C, 100°C, 120°C, 130°C, 150°C or a range between any two of the above values; in order to reduce the process cost, the time of the thickness shrinkage treatment (only achieving the densification effect) is preferably 0.1-3 min; and optionally, the time of the thickness shrinkage treatment is 0.1 min, 0.5 min, 1 min, 2 min, 3 min or a range between any two of the above values. The process time will be decreased at high temperature, but the device cost will also be increased.

In a specific embodiment provided by the present invention, the thickness shrinkage treatment is carried out by rolling; specifically, a pair of hot rolls which rotate oppositely is adopted for continuous hot pressing, as shown in FIG. 11, FIG. 11 is a schematic diagram of continuous hot pressing processing of a hot roll, in which, 6 is the unidirectional veneer with partial substances removed, and 7 is the pair of hot rolls which rotate oppositely; and the stress direction of the unidirectional wood fiber paper is not determined during rolling, but it is a transverse direction or a thickness direction according to force decomposition.

In a specific embodiment provided by the present invention, the thickness shrinkage treatment is carried out by continuous hot pressing through the continuous flat press, as shown in FIG. 12, FIG. 12 is a schematic diagram of continuous hot pressing processing of a continuous flat press, in which, 6 is the unidirectional veneer with partial substances removed, 8 is the flat press, and 9 is a driving roll.

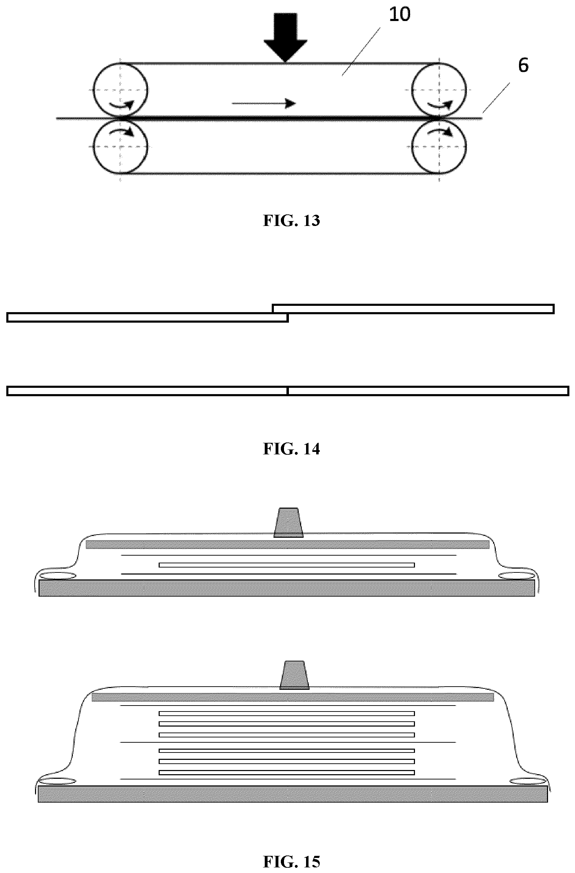

In a specific embodiment provided by the present invention, the thickness shrinkage treatment is carried out by continuous hot pressing through the belt press, as shown in FIG. 13, FIG. 13 is a schematic diagram of continuous hot pressing processing of a belt press, in which, 6 is the unidirectional veneer with partial substances removed, and 10 is the belt press.

In the present invention, the transverse shrinkage treatment and the thickness shrinkage treatment may cause different process time and process times according to different used processes, can be carried out for multiple times, or for one time, can be alternately or simultaneously carried out, and finally, the running time and the running times of the target parameter design process are achieved.

The effect of bidirectional shrinkage treatment is mainly reflected in the reduction of the water content and the thickness of the unidirectional veneer with partial substances removed, and after the unidirectional veneer with partial substances removed is subjected to bidirectional shrinkage treatment, the thickness of the veneer feedstock is reduced to be less than or equal to 0.6 mm from the original thickness of 0.05-0.8 mm; the thickness of the veneer subjected to bidirectional shrinkage treatment is preferably 10%-80% of the thickness of the unidirectional veneer; and the water content of the veneer cleaned and soaked after chemical modification is preferably reduced to be less than 30% after bidirectional shrinkage treatment, and more preferably reduced to be 20%-30%.

In the present invention, the unidirectional wood fiber paper is dense in the thickness direction and the transverse (width) direction through the external or spontaneous physical effect by the bidirectional shrinkage process. By transverse shrinkage, the transverse binding force and the compactness of the unidirectional wood fiber paper can be increased, and transverse cracking of the unidirectional wood fiber paper is avoided; by thickness shrinkage, the compactness of the unidirectional wood fiber paper can be increased, and the performance of the unidirectional wood fiber paper is improved; and through the simultaneous or sequential shrinkage effect in the two directions, the performance of the unidirectional wood fiber paper can be greatly improved. Further, in cooperation with temperature control, rapid shrinkage and densification and rapid dehydration of the unidirectional wood fiber paper can be achieved at the same time, and wrinkles and transverse cracks are avoided. The bidirectional shrinkage process provided by the present invention can be generally completed within 5 min, so the process efficiency is high.

In a specific embodiment provided by the present invention, the thickness shrinkage includes hot-pressing treatment under a negative pressure condition; the thickness shrinkage as well as the levelling and dehydration of the unidirectional wood fiber paper can be simultaneously implemented by the hot-pressing treatment under the negative pressure condition; the pressure of the hot-pressing treatment is preferably 0.1-60 MPa, more preferably 0.1-15 MPa; optionally, the pressure of the hot-pressing treatment is 0.01 MPa, 0.05 MPa, 0.1 MPa, 0.5 MPa, 1 MPa, 5 MPa, 10 MPa, 15 MPa, 20 MPa, 25 MPa, 30 MPa, 35 MPa, 40 MPa, 45 MPa, 50 MPa, 55 MPa, 60 MPa or a range between any two of the above values; the flow in the negative pressure condition is preferably 50-500 L/min; optionally, the flow in the negative pressure condition is 50 L/min, 80 L/min, 100 L/min, 150 L/min, 200 L/min, 250 L/min, 300 L/min or a range between any two of the above values; the temperature of the hot-pressing treatment is preferably 50 °C -150°C; optionally, the temperature of the hot-pressing treatment is 50°C, 80°C, 100°C, 120°C, 130°C, 150°C or a range between any two of the above values; the time of the hot-pressing treatment is preferably 0.5-20 min; and optionally, the time of the hot-pressing treatment is 0.5 min, 1 min, 2 min, 3 min, 4 min, 5 min, 8 min, 10 min, 12 min, 15 min, 18 min, 20 min or a range between any two of the above values. If the thickness shrinkage treatment is realized only by the hot-pressing treatment under the negative pressure condition, the pressure is low, consequently, more time is needed.

In the present invention, according to requirement for the size of the unidirectional wood fiber paper, splicing is carried out before or after bidirectional shrinkage treatment. The flatness of the wood fiber paper subjected to bidirectional shrinkage treatment is improved, and the water content is reduced. However, due to the size limitation of the veneer feedstock, the veneer in chemical treatment is discontinuous, and in order to meet the use requirement, it is needed to connect the wood fiber paper to achieve different sizes. During use, it can be cut according to actual requirements, then used for preparing products of different sizes; for the whole size, it can be spliced to be infinite in width and length theoretically, the length of the unidirectional wood fiber paper in splicing is preferably 0.1-5 m, and the width is preferably 0.01-1 m. In the present invention, the splicing can be performed on two or a plurality of pieces of unidirectional wood fiber paper, as long as the size of the spliced wood fiber paper meets the requirement; the splicing is specifically to mark splicing contours on the unidirectional veneer with partial substances removed or the wood fiber paper subjected to bidirectional shrinkage treatment, and then splice the corresponding parts; more specifically, before splicing, splicing parts are designed on the unidirectional veneers with partial substances removed and to be spliced or the wood fiber paper subjected to shrinkage treatment and to be spliced, it is mainly to mark related splicing contours, then some splicing technologies are applied to connect the plurality of pieces of scattered unidirectional veneers with partial substances removed or the wood fiber paper subjected to shrinkage treatment to form a piece of large-size unidirectional wood fiber paper; and after splicing, the thickness of the wood fiber paper at the spliced position is about 0.08-0.12 mm.

In the present invention, the unidirectional wood fiber paper can be spliced in a partial region stacking manner, as shown in the upper part in FIG. 14, it can also be spliced in a region-free stacking manner, as shown in the lower part in FIG. 14.

In the present invention, the splicing process can be one or more of: glue splicing, glue line seam splicing, wet extrusion splicing and film covering splicing.

In a specific embodiment provided by the present invention, the glue splicing can be adopted, specifically, glue is coated on an stacking partial one unidirectional veneer with partial substances removed and to be spliced or one piece of wood fiber paper subjected to shrinkage treatment and to be spliced, and then the stacking parts of the other unidirectional veneer with partial substances removed or the other piece of wood fiber paper subjected to shrinkage treatment are pressed on the stacking part coated with the glue, thus the stacking parts of two unidirectional veneers with partial substances removed or two pieces of wood fiber paper subjected to shrinkage treatment are spliced after the glue is cured, and the size of the continuous wood fiber paper is increased. Because the stacking parts are the thicknesses of the two unidirectional veneer with partial substances removed or the two pieces of wood fiber paper subjected to shrinkage treatment, and are thicker than other parts; and pressure can be applied to the stacking parts, so as to reduce the thicknesses of the stacking parts, and improve the thickness uniformity of the whole wood fiber paper.

In a specific embodiment provided by the present invention, the glue line seam splicing can be adopted, specifically, the contour shapes of the unidirectional veneer with partial substances removed and to be spliced or the wood fiber paper subjected to shrinkage treatment and to be spliced are designed to be completely fitted with each other, the contours of two unidirectional veneers with partial substances removed and to be spliced or two pieces of wood fiber paper subjected to shrinkage treatment and to be spliced are fitted with each other, and then glue lines move back and forth along two fitted contour lines; the glue lines are stuck with the surface of the unidirectional wood fiber paper, the glue lines are continuous so that the positions of the two unidirectional veneers with partial substances removed or the two pieces of wood fiber paper subjected to shrinkage treatment are fixed, and thus the purpose of splicing the unidirectional wood fiber paper is realized. In order to improve the firmness of splicing, on one hand, the number of the glue lines on the two unidirectional veneers with partial substances removed or the two pieces of wood fiber paper subjected to shrinkage treatment can be increased in the seam splicing process; on the other hand, both sides of the unidirectional veneer with partial substances removed or the wood fiber paper subjected to shrinkage treatment can be subjected to seam splicing. The glue line seam splicing has the advantages that there are no stacking parts of two pieces of unidirectional wood fiber paper in the seam splicing process, and the size of the wood fiber paper can be increased only by fitting the contours, so that the thickness of the seam splicing partial the wood fiber paper is basically the same as that of other parts.

**In** a specific embodiment provided by the present invention, the wet extrusion splicing can be adopted, specifically, the wet extrusion splicing mode is similar to the glue splicing mode, but glue is not suitable, and only water is used. Water is applied to the stacking parts of the unidirectional veneer with partial substances removed and to be spliced or the wood fiber paper subjected to shrinkage treatment and to be spliced until the stacking parts are wetted thoroughly and then overlapped together, a large pressure (≥5 MPa) is applied, and heating and drying are carried out till the wood fiber paper is dried and then attached together, thus achieving the purpose of splicing. The unidirectional veneer with partial substances removed or the wood fiber paper subjected shrinkage treatment in the wet state is soft in structure; under the action of large pressure, the structures of two unidirectional veneers with partial substances removed or two pieces of wood fiber paper subjected to shrinkage treatment can be tightly pressed together and bonded to each other till hydrogen bond are bonded, the pressure is kept till the wood fiber paper is dried, and therefore the bonding force is fixed, and splicing is finished. The wet extrusion splicing mode has the advantages that the pure natural attribute of the wood fiber paper is well kept, wood fiber paper of any size and breadth can be easily manufactured, and after film covering/pre-impregnating is conducted in the later procedure, a continuous prepreg of infinite sizes can be produced theoretically.

**In** a specific embodiment provided by the present invention, the film covering splicing can be adopted, specifically, a continuous glue film is selected according to the needed large size, then pieces of small-size unidirectional wood fiber paper are pressed on the glue film, and all the pieces of small-size unidirectional wood fiber paper are spliced together through the connection of the glue film, thus achieving the purpose of increasing the size. The type of the glue film can be selected according to needs, the mode that a thin mat is mixed with glue can also be selected for self-manufacturing, and its principle is that a layer of film is added to connect the pieces of small-size unidirectional wood fiber paper, and the continuous prepreg of infinite sizes can also be produced theoretically by this method.

The present invention also provides another preparation method for unidirectional wood fiber paper, which includes the following steps: A1) chemically modifying a unidirectional veneer to obtain a unidirectional veneer with partial substances removed; and A2) performing shrinkage treatment and levelling treatment on the unidirectional veneer with partial substances removed in at least one direction to obtain the unidirectional wood fiber paper; and the levelling treatment is to perform planar hot pressing in a negative pressure air pumping environment.

The shrinkage treatment in step A1) and step A2) is the same as the above, which will not be listed herein; and specifically, the thickness shrinkage treatment in the shrinkage treatment in step A2) does not include the hot-pressing treatment under the negative pressure condition.

Through the levelling treatment, the veneer subjected to shrinkage treatment can be dehydrated more efficiently and quickly, and good flatness can be achieved in the dehydration process, and then the unidirectional wood fiber paper can be obtained; and the levelling effect is mainly reflected in quickly and efficiently improving the flatness of the wood fiber paper and reducing the water content, and then dry and flat unidirectional wood fiber paper is obtained.

According to the present invention, further, specifically, the water content of the obtained unidirectional wood fiber paper can be less than or equal to 10 wt% by the levelling treatment.

According to the present invention, exhaust channels are arranged on two contact surface or a single contact surface of the unidirectional wood fiber paper during levelling treatment. Specifically, it can be realized by various forms of devices such as a heatable negative pressure film press, and a vacuum hot press, for example, the vacuum hot press provided with a plurality of exhaust channels. The levelling process is characterized in that heating can be performed in the processing process, and double surfaces or the single surface of the pressed wood fiber paper can be directly provided with the exhaust channels, so that water vapor can be discharged. Generally, the pressure in the levelling process will be obviously lower than the pressure in thickness shrinkage, and the pressure is too high, so the discharge speed of the water vapor will be reduced, and the levelling efficiency will be reduced. When the levelling process is adopted, the pressure is selected to meet the purpose of preventing the unidirectional wood fiber paper from wrinkles in the drying process. The pressure in the levelling treatment can be 0.01-2 MPa; optionally, the pressure of the levelling treatment is 0.01 MPa, 0.05 MPa, 0.1 MPa, 0.5 MPa, 1 MPa, 1.5 MPa, 2 MPa or a range between any two of the above values; the heating temperature of the levelling treatment is 40 °C -150°C; and optionally, the heating temperature of the levelling treatment is 40°C, 50°C, 70°C, 80°C, 100°C, 120°C, 150°C or a range between any two of the above values. By reasonably arranging the exhaust channels on the contact surfaces of the unidirectional wood fiber paper, the levelling can be finished within 0.1-4 min; and optionally, the time of the levelling treatment is 0.1 min, 0.5 min, 1 min, 2 min, 3 min, 4 min or a range between any two of the above values.

The present invention also provides a wood fiber paper prepreg, which includes the unidirectional wood fiber paper and a polymer layer attached to at least one surface of the unidirectional wood fiber paper.

According to the present invention, a polymer in the polymer layer is thermosetting resin and/or thermoplastic resin well known to those skilled in the art, there is no special limitation. **In** the present invention, specifically, the thermosetting resin can be one or more of epoxy resin, unsaturated polyester, polybutadiene resin, phenolic resin and crosslinkable polyurethane; and specifically, the thermoplastic resin can be polyamide, polylactic acid, polyurethane, ethylene-vinyl acetate copolymer, ethylene-acrylate copolymer, copolyester and other hot melt adhesive-grade polymers.

According to the present invention, the mass of the polymer layer is preferably 5%-85% of the mass of the unidirectional wood fiber paper prepreg.

According to the present invention, the unidirectional wood fiber paper prepreg includes the unidirectional wood fiber paper; and the single surface and/or two surfaces of the unidirectional wood fiber paper are provided with the polymer layer.

According to the present invention, the thickness ratio of the polymer layer to the unidirectional wood fiber paper is preferably (5:1)-(0.05:1).

According to the present invention, the areal density of the unidirectional wood fiber paper prepreg is preferably 30-500 g/m².

According to the present invention, the thickness of the unidirectional wood fiber paper prepreg is preferably 0.03-0.7 mm.

According to the present invention, the gram weight of the polymer layer is preferably 5-200 g/m².

The present invention also provides a preparation method for a unidirectional wood fiber paper prepreg, which includes the following step: transferring a polymer to at least one surface of the unidirectional wood fiber paper to obtain the unidirectional wood fiber paper prepreg; and the transfer method is selected from one or more of film covering, infiltration and coating.

**In** a specific embodiment provided by the present invention, the transfer method is film covering, and specifically includes the following steps: enabling the unidirectional wood fiber paper and a polymer adhering film to pass an automatic film covering machine that has a double-side heating function, in which, the polymer that is in a molten state at a high temperature and the unidirectional wood fiber paper can be mutually infiltrated under the rolling action, thereby obtaining a single-layer flaky unidirectional wood fiber paper prepreg with the polymer layer on the surface.

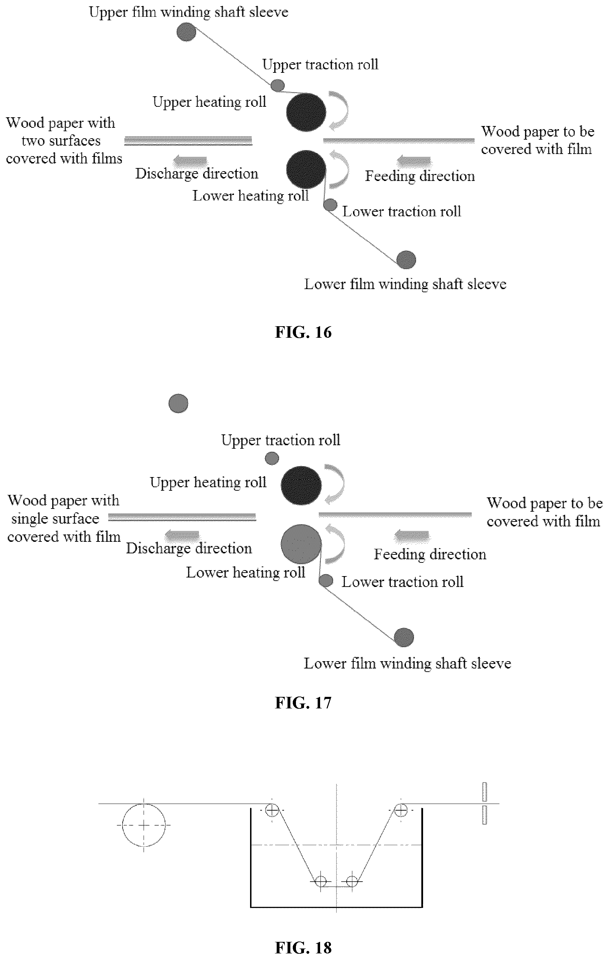

**In** a specific embodiment provided by the present invention, the preparation flow of the unidirectional wood fiber paper prepreg is shown in FIG. 16, and specifically includes the following steps: preparing two polymer adhering film reels that have the same breadth as the unidirectional wood fiber paper, and respectively fixing to an upper film winding shaft sleeve and a lower film winding shaft sleeve of the automatic film covering machine; opening a paper feeding table plate and a heating rubber roll protective cover, enabling the tail ends of polymer adhering films on an upper shaft sleeve and a lower shaft sleeve to respectively pass through an upper traction roller and a lower traction roller, and flatly covering the surfaces of a pair of heating rubber roll of the film covering machine in an stacking way to ensure that the two ends of the adhering films are aligned; mounting the paper feeding table plate and the heating roll protective cover, and adjusting a positioner on the table plate to the same width according to the breadth of the wood fiber paper; switching on a power supply of the automatic film covering machine, and selecting a working mode to be a hot film covering mode; setting corresponding rubber roll heating temperatures and selecting a proper film covering speed gear according to the types and gram weights of the polymer adhering films to be covered, and starting to preheat the double rubber rolls; after the upper rubber roll and the lower rubber roll are preheated to specified temperatures, feeding the unidirectional wood fiber paper to be covered with the film from the paper feeding table plate to be between the heated double rolls, and keeping in flat and aligning with the polymer adhering films on the upper layer and the lower layer; and starting a motor to operate the rubber rolls, enabling the unidirectional wood fiber paper and the two layers of polymer adhering films to pass through the heating rolls together, in which, a series of processes such as heating, melting, infiltrating and press-fitting at the joints of the polymer adhering films and the heating rolls can be sequentially implemented in the penetrating process, thus finishing the film covering process of the unidirectional wood fiber paper. In the film covering process, the film covering speed and the clearance between the heated double rolls can be properly adjusted according to conditions, so as to ensure the stability and continuity of the film covering process, and achieve an ideal film covering condition.

In another specific embodiment provided by the present invention, according to actual requirements, the working mode can be changed from a working mode of covering films on the upper and lower surfaces to a working mode of covering the film on a single surface by heating the upper roll and laying the film on the lower roll and fitting, namely, if a double-rubber-roll preheating button is turned off, the machine will automatically switch to upper rubber roll heating mode. The polymer adhering film reel on the lower film winding shaft sleeve is pulled out, passes through the lower traction roll and then is fed into a position between the double roller in transfer together with the unidirectional wood fiber paper to be covered with film, and then is subjected to a series of processes such as heating, melting, infiltration, lamination and the like sequentially, thus finishing the film covering process of the wood fiber paper with single surface to be covered with the film, and obtaining the unidirectional wood fiber paper prepreg; and the schematic diagram of preparation flow is shown in FIG. 17, and FIG. 17 is a schematic diagram of a single-surface film covering work.

According to the present invention, the polymer adhering films can be a lamellar thermoplastic polymer adhering film or a thermosetting polymer adhering film.

Further, specifically, the lamellar thermoplastic polymer adhering film includes: a continuous reticular or lamellar film material taking hot melt adhesive-grade polymers such as polyamide, polylactic acid, polyurethane, ethylene-vinyl acetate copolymer, ethylene-acrylate copolymer, and copolyester as a matrix, and a spunlace nonwoven fabric, a needle-punched nonwoven fabric, a spunbonded nonwoven fabric and a melt-blown nonwoven fabric material taking thermoplastic polymers such as polypropylene, polyamide, polylactic acid, polyester, and viscose as a matrix.

Further, specifically, the thermosetting polymer adhering film includes: a continuous lamellar film material taking thermosetting polymer precursor such as epoxy resin, unsaturated polyester, polybutadiene resin, phenolic resin, and crosslinkable polyurethane as a matrix.

According to the present invention, the specification of the polymer adhering film is that the selected breadth range is 10-5000 mm.

Further, specifically, the gram weight of the thermoplastic polymer adhering film is preferably 5-200 g/m², more preferably 5-80 g/m², still more preferably 10-60 g/m², and most preferably 10-50 g/m².

Further, specifically, the gram weight of the thermosetting polymer adhering film is preferably 5-200 g/m², still more preferably 5-120 g/m², and more preferably 10-100 g/m².

Further, specifically, the temperature of rubber roll heating is preferably 70-170°C, more preferably 80-160°C, and still more preferably 110-150°C.

Further, specifically, the film covering rate is preferably 0.6-2.4 m/min, more preferably 0.6-2.0 m/min, and still more preferably 0.9-1.8 m/min.

Functional aids such as a flame retardant and an anti-moisture absorption agent can be added to the thermosetting/thermoplastic polymer system for film covering, and thus prepreg has the characteristics of flame retardance, moisture absorption resistance and the like.

In a specific embodiment provided by the present invention, the transfer method is dip coating and/or coating, and the polymer is liquid.

Further, specifically, the unidirectional wood fiber paper prepreg is prepared by the following steps: feeding (such as in a roller manner) the unidirectional wood fiber paper into a resin tank for coating/dip coating, immersing the unidirectional wood fiber paper in the liquid, then continuously conveying the unidirectional wood fiber paper to a right scraper, and retaining the polymer with a specific thickness on the surface of the unidirectional wood fiber paper; and with reference to FIG. 18, FIG. 18 is a schematic diagram of a unidirectional wood fiber paper prepreg prepared by a coating and scraping method. The polymer in the step is generally a single-component curing system and has the characteristic of low curing speed at normal temperature, and it is generally needed to be stored at normal temperature/low temperature for 3 months without losing efficacy, and curing can be finished within several hours after the temperature is raised to the use temperature. The polymer can be thermosetting polymer precursors such as epoxy resin, unsaturated polyester, polybutadiene resin, phenolic resin and crosslinkable polyurethane.

The present invention also provides a wood fiber paper reinforced composite, which includes a plurality of layers of unidirectional wood fiber paper; and adjacent unidirectional wood fiber paper is bonded through the polymer.

The polymers between different adjacent wood fiber paper can be the same or different in type. Further, specifically, waterproof polymer layers are preferably arranged on the surfaces of the unidirectional wood fiber paper on two surfaces of the wood fiber paper reinforced composite, and thus the waterproofness of the wood fiber paper reinforced composite can be improved.

According to the present invention, the tensile strength of the wood fiber paper reinforced composite is preferably 130-1000 MPa, more preferably 150-1000 MPa.

According to the present invention, the flexual strength of the wood fiber paper reinforced composite is preferably 130-1000 MPa.

According to the present invention, the Young's modulus of the wood fiber paper reinforced composite is preferably 12-75 GPa, more preferably 12-60 GPa.

According to the present invention, the ratio of a bio-based component or a natural component of the wood fiber paper reinforced composite is preferably 50%-100%.

According to the present invention, the volume fraction of the wood fiber paper in the wood fiber paper reinforced composite is preferably 50%-95%.

According to the present invention, the wood fiber paper reinforced composite has the unidirectional texture characteristics of common natural wood.

According to the wood fiber paper reinforced composite, a laminated structure is formed in the thickness direction of a cutting surface of the wood fiber paper reinforced composite; the layered distribution of the wood fiber paper reinforced composite is clearly visible in the longitudinal cross-section; and because it is needed to apply pressure in the molding process of the wood fiber paper reinforced composite, the thickness of the unidirectional wood fiber paper in the wood fiber paper reinforced composite is smaller than that of the unidirectional wood fiber paper in feedstocks, preferably 0.02-0.6 mm.

According to the present invention, the density of the wood fiber paper reinforced composite is preferably 0.8-1.5 g/cm³.

In a specific embodiment provided by the present invention, at least one surface of the wood fiber paper reinforced composite is provided with a waterproof polymer layer.

The present invention also provides a preparation method for the wood fiber paper reinforced composite, which includes the following steps: stacking, curing and molding the unidirectional wood fiber paper prepreg to obtain the wood fiber paper reinforced composite; or stacking, sizing and molding the unidirectional wood fiber paper to obtain the wood fiber paper reinforced composite.

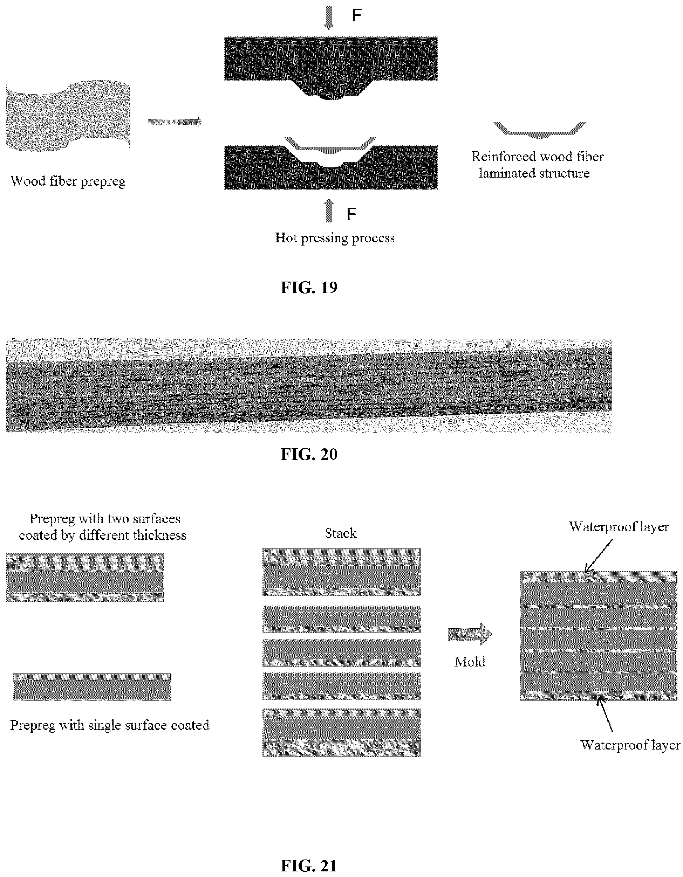

As shown in FIG. 19, FIG. 19 is a schematic diagram of a principle of preparing a wood fiber paper reinforced composite with a unidirectional wood fiber paper prepreg.

In the present invention, the curing and molding method of the unidirectional wood fiber paper prepreg can be a conventional method for composite molding, including but not limited to an autoclave method, a vacuum bag pressing method, a counter-mold pressing method and the like; and further, the wood fiber paper prepreg can be cut into a required shape and size according to the appearance and size characteristics of the product, and then the wood fiber paper prepreg is stacked, cured and molded to obtain the wood fiber paper reinforced composite.

In a specific embodiment provided by the present invention, the wood fiber paper reinforced composite is prepared according to the following steps: cutting the unidirectional wood fiber paper prepreg into the required shape and size, placing the prepreg in a mold according to a laying design, heating and pressurizing the prepreg, then cooling and taking out the product to obtain the required laminated structure. Specifically, the unidirectional wood fiber paper prepreg can be flexibly placed in the mold according to the laying design requirement; by the mold, the obtained wood fiber paper reinforced composite can contain complex geometric characteristics such as a plane, a curved surface, an inclined surface, a cambered surface and a cylindrical surface, as shown in FIG. 20, FIG. 20 is a cross-sectional schematic diagram of a wood fiber paper reinforced composite; the pressurization can be implemented by any one or more of hydraulic pressure, vacuum, compressed air ways and the like; and the heating can be implemented by any one or more of electric heating, electromagnetic heating, heat radiation ways and the like.

In another specific embodiment provided by the present invention, the unidirectional wood fiber paper prepregs on the upper and lower surfaces and/or unidirectional wood fiber paper prepregs on upper and lower surface sub-layers in the wood fiber paper reinforced composite are preferably unidirectional wood fiber paper prepregs coated with waterproof polymers on both surfaces, and the other internal layers still adopt unidirectional wood fiber paper prepregs coated with polymers on single surface; after molding, the outer side of the laminated structure has the waterproof polymer layer with a certain thickness, and the waterproof polymer layer can effectively block water absorption, as shown in FIG. 21, FIG. 21 is a schematic diagram of preparing a wood fiber paper reinforced composite with waterproof performance by a unidirectional wood fiber paper prepreg; the waterproof polymer is a waterproof polymer well known to those skilled in the art, and there is no special limitation, it can be epoxy resin, polyurethane, polyester, phenolic aldehyde, acrylic resin and other common thermosetting polymer systems, and can also be polyethylene, polypropylene, copolyalkenamer, polyamide, polylactic acid, acrylonitrile-butadiene-styrene copolymer, polyurethane, ethylene-vinyl acetate copolymer, ethylene-acrylate copolymer, polymethacrylate, copolyester and other thermoplastic polymer systems; and the thickness of the waterproof polymer coated in the unidirectional wood fiber paper prepregs coated with the waterproof polymers on both surfaces is preferably 0.001-1 mm, more preferably 0.005-0.5 mm; and it can be simply realized by the film covering or dip coating method.

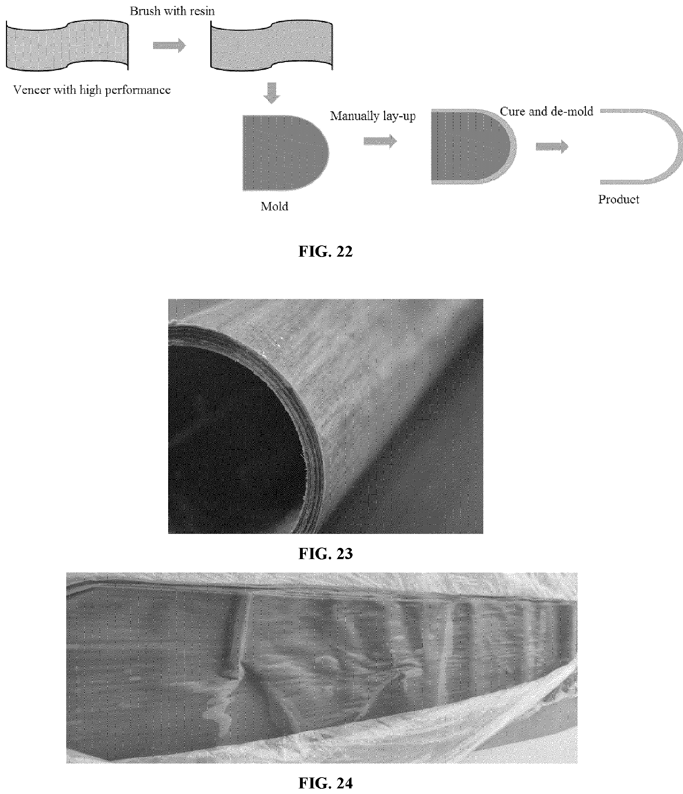

In the present invention, besides the unidirectional wood fiber paper prepreg, the unidirectional wood fiber paper also has good manufacturability, and it can be used for molding the product by common methods such as manual lay-up molding, resin molding transfer molding, vacuum-assisted resin molding transfer molding, compression molding, and vacuum bag pressing in the field of composites. Different from the unidirectional wood fiber paper prepreg, it is needed to coat or brush the polymer on the unidirectional wood fiber paper by a machine or by hand before molding. The polymer is as described above and is not listed herein. As shown in FIG. 22, FIG. 22 is a process schematic diagram of preparing a wood fiber paper reinforced composite by unidirectional wood fiber paper.

In the present invention, after the unidirectional wood fiber paper with high performance is prepared, it is immediately subjected to film covering/infiltration process to prepare the unidirectional wood fiber paper prepreg, and thus the later use process is simple, and it is basically completely similar to the use method for the prepreg in composite molding. A plurality of unidirectional wood fiber paper prepregs are overlapped, then the overlapped prepregs are placed into the mold, a relatively small pressure is applied, and after resin is cured, molding is implemented to obtain the product, and thus the wood fiber paper reinforced composite is prepared.

The present invention further provides a wood hollow tube which is formed by the unidirectional wood fiber paper, the unidirectional wood fiber paper prepreg or the wood fiber paper reinforced composite. As shown in FIG. 23, FIG. 23 is an object diagram of a wood hollow tube.

The forming process of the wood fiber paper reinforced composite and the wood hollow tube provided by the present invention is that each layer of unidirectional wood fiber paper and/or unidirectional wood fiber paper prepreg is cut into corresponding size and shape, then stacked according to the design drawing, and in the stacking process, the materials are needed to form three-dimensional characteristics at the same time, for example, the materials are attached to the surface of a pre-machined mold or wound around/coated on the surface of a core rod mold, and then, de-molding is carried out after the polymer is cured, thus finishing the structure molding of the wood fiber paper reinforced composite or the wood hollow tube. In addition, because the feedstock used in the present invention is the unidirectional wood fiber paper and/or the unidirectional wood fiber paper prepreg, the molding capacity of the mold and the complex structure molding capacity are realized.

The present invention further provides a method for shrinkage of a unidirectional veneer, which includes that shrinkage treatment is carried out on the unidirectional veneer in at least one direction; and shrinkage includes transverse shrinkage and thickness shrinkage.

The unidirectional veneer is the same as the above and is not listed herein.

In the specific embodiment provided by the present invention, the unidirectional veneer is subjected to chemical treatment to remove partial substances, and then subjected to shrinkage treatment in at least one direction. The chemical treatment method is the same as the above and is not listed herein.

In the specific embodiment provided by the present invention, the shrinkage includes transverse shrinkage and thickness shrinkage; and the shrinkage force direction of transverse shrinkage and the shrinkage force direction of thickness shrinkage are crossed.

Specifically, the unidirectional veneer includes wood fibers and/or fiber bundles; the wood fibers and/or the fiber bundles are integrally arranged or extend in a single direction at a microscopic level; the shrinkage force of transverse shrinkage is the force in the direction parallel to the unidirectional veneer, and is in the direction intersected with the extending direction of the wood fibers and/or fiber bundles in the plane; and/or, the shrinkage force of thickness shrinkage is the force in the direction vertical to the unidirectional veneer; and the force in the horizontal direction and the force in the vertical direction are original applied forces independently from each other, and/or, forces produced by a force after decomposed or forces after composed. The transverse shrinkage and the thickness shrinkage are the same as the above and are not listed herein.

In the present invention, unless specifically specified, the pressure refers to the pressure on the unidirectional veneer and the unidirectional wood fiber paper.

In order to further describe the present invention, the unidirectional wood fiber paper and the preparation method therefor, the unidirectional wood fiber paper prepreg and the preparation method therefor, and the wood fiber paper reinforced composite and the preparation method therefor are described in detail in combination with the following embodiments below.

Reagents used in the following embodiments are all commercially available.

### Example 1 (Continuous transverse and thickness shrinkage processes)

### 1) Chemical treatment

A reaction solution was prepared firstly, and the total solution volume was 100 L. A reactor was a vertical reactor (externally connected to a circulating pump), and a material pot of the vertical reactor provided by the present invention was used for loading a unidirectional veneer for chemical treatment. Sodium hydroxide and sodium sulfite were dissolved in water, the concentration of sodium hydroxide in the reaction solution was 100 g/L, the concentration of sodium sulfite was 50 g/L, and the pH of the reaction solution was 14. Then, the reaction solution and a unidirectional basswood veneer with the thickness of 0.28 mm were put into the reactor according to the material ratio of 0.49 m²/L, the reactor was heated to 125°C to make the whole internal system in a high-pressure state; then, after the target temperature was kept at high temperature under high pressure for 6 h, the temperature was decreased until entering a normal temperature and normal pressure state of the internal system, then, the reactor was opened, the unidirectional veneer with partial substances removed was taken out and washed with water, and thus finishing the chemical modification process; and as shown in FIG. 24, FIG. 24 is a photo of a unidirectional veneer with partial substances removed in a wet state. The mass of the finally-obtained unidirectional veneer with partial substances removed was reduced by 50%.

### 2) Spontaneous transverse shrinkage

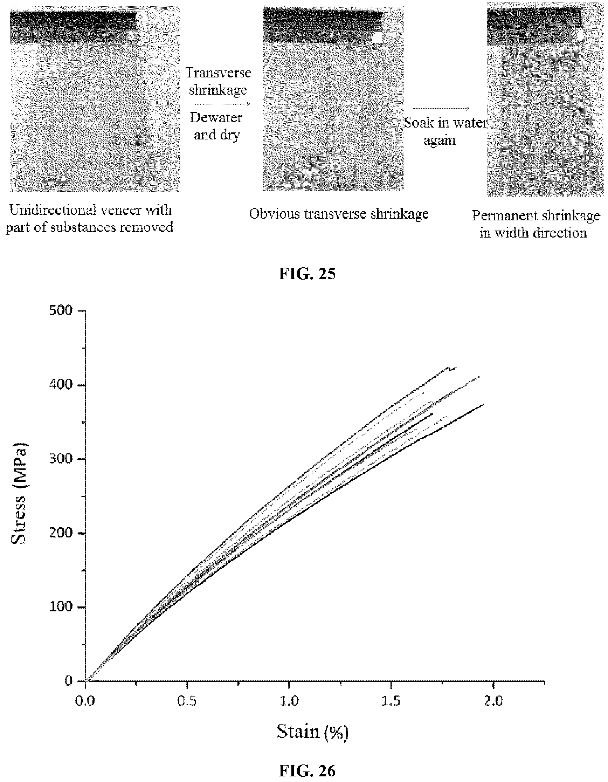

One unidirectional veneer with partial substances removed obtained in step 1) was prepared, and the width of the veneer was 10 cm. The veneer was placed in a drying oven to be heated to 80°C, the veneer was in a dry state after 2-3 min, and had obvious transverse shrinkage in the direction vertical to fiber direction, the apparent width was reduced by 50%, and the veneer obviously wrinkled. The width could not be completely recovered after the veneer was soaked in water and expanded again, which indicated that a partial irreversible transverse shrinkage effect was achieved; and as shown in FIG. 25, FIG. 25 is a diagram of spontaneous transverse shrinkage of a unidirectional veneer with partial substances removed.

### 3) Shrinkage and levelling treatment in thickness direction

The veneer (the thickness of a feedstock was about 0.28 mm) subjected to transverse shrinkage in step 2) was shrunk in the thickness direction by a vacuum hot press in a wet state, the pressure was 6 MPa, the compression time was 0.5 min, and the temperature was 110°C. The pressure was needed to be slowly raised in the compression process, thus preventing the veneer from being crushed due to excessive impact. The compression direction was vertical to the thickness direction of veneer fibers. Because most of hemicellulose and lignin were removed by chemical modification in step 1), a pore structure of the wood was fully opened, hydroxyl groups on the surface of hydrophilic cellulose were induced to form new hydrogen bonds in the water infiltration-extrusion process, and therefore adjacent wood fibers were tightly combined, and a dense veneer with the mechanical property greatly enhanced was obtained. The thickness of the veneer shrunk in the thickness direction was reduced to be about 0.08 mm, and the water content was 20%. Then negative pressure and extra positive pressure (the pressure in the thickness direction of the wood fiber paper was about 0.5 MPa) were started, the flow was about 150 L/min, the temperature was still 110°C, the process was kept for 4 min, and then dry and flat unidirectional wood fiber paper was obtained, cracks were hardly generated basically and the probability was 5% or below, and the average thickness of the unidirectional wood fiber paper was 0.08 mm. According to a flatness testing method described in the specification, the wood fiber paper was placed between two smooth and flat glass plates, a small pressure of about 4500 Pa was applied to the surfaces of the glass, and a clearance between the glass plates was measured to range from 0.15-0.2mm (the glass plates were not completely flat, so the clearance was the maximum value of the apparent thickness of the highest point and the lowest point of the wood fiber paper). The average water content was 4%, and the final width was reduced by about 30% compared with that of the wet veneer after chemical treatment. A mechanical tensile test was carried out based on a plastic tensile test standard GB/T1040.1-2006, the width of a wood fiber paper sample strip was 4 mm, the tensile rate was 2 mm/min, and a tensile curve was obtained as shown in FIG. 26, FIG. 26 is a curve diagram of a tensile stress strain test in a fiber direction of unidirectional wood fiber paper; and as shown in FIG. 26, the average breaking strength of the unidirectional wood fiber paper is 381 MPa, the average elasticity modulus is 32 GPa, the tensile strength in the direction vertical to the fibers is 8.7 MPa, and the tensile modulus is 1.74 GPa.

### Contrast Example 1 (Shrinkage in thickness direction)

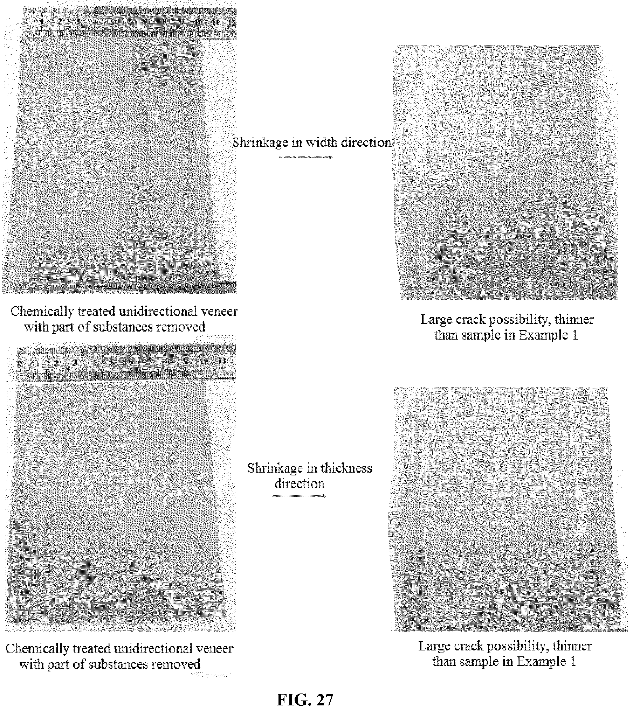

The chemical treatment was the same as that in the Example 1. Transverse shrinkage procedure was not carried out, a wet veneer (with the width being 10 cm) after chemical treatment was directly subjected to shrinkage in the thickness direction through a vacuum hot press, the pressure was still 6 MPa, and the compression time was 0.5 min. The same as that in the Example 1, the negative pressure and extra positive pressure (the pressure in the thickness direction of the wood fiber paper was about 0.5 MPa) were started, the flow was about 150 L/min, the temperature was still 110°C, and the process was kept for 4 min. The press was opened and cracks appeared on partial the wood fiber paper, the occurrence probability was about 40%, the average thickness was 0.07 mm and was smaller than that of a veneer subjected to transverse shrinkage, the width was basically not changed, as shown in FIG. 27, FIG. 27 is an object diagram of a veneer only shrinking in a thickness direction after chemical treatment. A mechanical tensile test was carried out, and the obtained tensile properties of the wood fiber paper were that: the average tensile strength in the fiber direction was 348 MPa, and the average tensile modulus was 30 GPa; and the tensile strength in the direction vertical to the fiber direction was 4.8 MPa, and the tensile modulus was 1.1 GPa.

For the same batch and specification of wood fiber paper, the average parameters and performance of the unidirectional wood fiber paper obtained in the Example 1 and the Contrast Example 1 are shown in Table 1.

**Table 1 Average parameters and performance of unidirectional wood fiber paper**

| | | Width shrinkage | Thickness shrinkage | Strength in fiber direction | Modulus in fiber direction | Strength in direction vertical to fiber direction | Modulus in direction vertical to fiber direction |
|---|---|---|---|---|---|---|---|
| Example 1 | Spontaneous transverse shrinkage | ~30% | ~72% | 381 MPa | 32GPa | 8.7MPa | 1.7GPa |
| Contrast Example 1 | No transverse shrinkage | Basically not | ~75% | 348MPa | 30 GPa | 4.8MPa | 1.1GPa |

### Example 2 (Transverse shrinkage mode)

The chemical treatment was the same as that of the Example 1, different modes were adopted for transverse shrinkage, and the thickness compression mode was the same: the wood fiber paper was placed on a smooth metal table top having the surface roughness of Ra1.6, and a cover plate was placed on the smooth metal table top. The cover plate was prepared by a pre-tensioned silica gel soft film, the tensioning force was in a direction vertical to the fiber direction of the wood fiber paper, and the tightness degree was adjustable. About 0.5 MPa pressure was applied to the cover plate to tightly attach the silica soft gel to the wood fiber paper to generate pressure, and in the process of releasing the tensioning force of the silica gel soft film, the wood fiber paper was subjected to transverse shrinkage under the action of friction force. In this example, the tension of the silica gel soft film is controlled to achieve the equivalent shrinkage pressure of 0.002 MPa, 0.2 MPa and 1.2 MPa. The obtained thickness shrinkage rate and the transverse shrinkage percentage of the wood fiber paper in the contrast example were tested, then the tensile mechanical property was tested, and the results are shown in Table 2.

**Table 2 Average parameters and performance of unidirectional wood fiber paper**

| | | Width shrinkage | Thickness shrinkage | Strength in fiber direction | Modulus in fiber direction | Strength in direction vertical to fiber direction | Modulus in direction vertical to fiber direction |
|---|---|---|---|---|---|---|---|
| Example 1 | Spontaneous transverse shrinkage | ~30% | ~72% | 381 MPa | 32GPa | 8.7MPa | 1.7GPa |
| Example 2 | 0.002MPa | ~3% | ~75% | 375 MPa | 31GPa | 5.0 MPa | 1.2GPa |
| Example 2 | 0.2MPa | ~32% | ~70% | 394MPa | 33GPa | 8.9MPa | 1.8GPa |
| Example 2 | 1.2MPa | ~38% | ~65% | 405 MPa | 32GPa | 10.8MPa | 2.1GPa |

### Example 3 (Thickness shrinkage mode and pressure comparison)

The chemical treatment and transverse shrinkage mode were completely consistent with those of the Example 1, and a rolling pressing method was adopted for thickness compression. The effect of adjusting the pressure in the thickness direction could be achieved by adjusting the clearance between rolls, as shown in FIG. 11. In the rolling pressing process, the wood fiber paper born a resultant force composed of the pressure and the friction force in the thickness direction, and the resultant force is in the direction shown by the dotted line in the figure. The component force (pressure) in the thickness direction could make the wood fiber paper have a good shrinkage effect. In the contrast example, the last clearance between the rolls was set to be 0.07 mm, and the average thickness of the compressed wood fiber paper was 0.08 mm. The tensile property of the wood fiber paper was tested, and the result is shown in Table 3.

**Table 3 Average parameters and performance of unidirectional wood fiber paper obtained by different thickness shrinkage modes**

| | | Width shrinkage | Thickness shrinkage | Strength in fiber direction | Modulus in fiber direction | Strength in direction vertical to fiber direction | Modulus in direction vertical to fiber direction |
|---|---|---|---|---|---|---|---|
| Example 1 | | ~30% | ~72% | 381 MPa | 32GPa | 8.7MPa | 1.7GPa |
| Example 3 | Rolling pressing shrinkage | ~31% | ~71% | 390 MPa | 33GPa | 8.5 MPa | 1.8GPa |

By comparing the pressure influence in thickness shrinkage, a veneer feedstock with the same specification as that of the Example 1 was selected, the chemical treatment, the transverse shrinkage mode and the thickness shrinkage mode were completely consistent with those in the Example 1, and the only difference was that the pressure in thickness shrinkage was 0.02 MPa as compared with 6 MPa in the Example 1. In addition, in order to compare the thickness shrinkage effect under larger pressure, a unidirectional veneer with the same specification was selected, the chemical treatment and the transverse shrinkage were the same as those in the Example 1, larger pressure of 18 MPa was adopted in thickness compression, then a vacuum press provided with an exhaust channel was used for levelling the wood fiber paper, and the levelling parameters were as follows: the pressure was 0.2 MPa, the temperature was 110°C, the flow of a vacuum air pump was about 150 L/min, and it was started for 1 min. All parameters of the unidirectional wood fiber paper obtained in the above procedures are shown in the Table 4.

**Table 4 Average parameters and performance of unidirectional wood fiber paper obtained in different thickness shrinkage conditions**

| | Pressure in thickness shrinkage | Width shrinkage | Thickness shrinkage | Strength in fiber direction | Modulus in fiber direction | Strength in direction vertical to fiber direction | Modulus in direction vertical to fiber direction |
|---|---|---|---|---|---|---|---|
| Example 1 | 6MPa | ~30% | ~72% | 381 MPa | 32GPa | 8.7MPa | 1.7GPa |
| Example 3 | 0.02MPa | ~31% | ~28% | 155 MPa | 22GPa | 7.7MPa | 1.5 GPa |
| Example 3 | 18MPa | ~30% | ~83% | 850 MPa | 75 GPa | 9.2MPa | 2.0 GPa |

### Example 4 (Sequence of compression direction)

The chemical treatment was the same as that of the Example 1, the same thickness compression mode was carried out, and the transverse shrinkage mode was the same as that of the Example 2. The difference was that thickness compression was carried out, and then was transverse shrinkage, and the specific details are described above. The wood fiber paper with excellent performance could be obtained by the mode of firstly carrying out thickness shrinkage, and the performance detection result is shown in Table 5.

**Table 5 Average parameters and performance of unidirectional wood fiber paper**

| | | Width shrinkag e | Thickness shrinkage | Strength in fiber direction | Modulus in fiber direction | Strength in direction vertical to fiber direction | Modulus in direction vertical to fiber direction |
|---|---|---|---|---|---|---|---|
| Example 4 | Thickness shrinkage first, transverse shrinkage second | 19% | 73% | 375 MPa | 32GPa | 6.5 MPa | 1.6GPa |

**The chemical treatment in Examples 5-9 was different from that in the Example 1, and other processes were the same.**

### Example 5

A reaction solution was prepared firstly, and the total solution volume was 20 L. A reactor was a vertical reactor, and a unidirectional veneer could be directly placed close to the wall of a bottle for reaction. Sodium hydroxide and sodium sulfite were dissolved into water, the concentration of the sodium hydroxide in the reaction solution was 100 g/L, the concentration of the sodium sulfite was 50 g/L, and the pH of the reaction solution was 14. Then, the reaction solution and a unidirectional basswood veneer with the thickness of 0.28 mm were put into the reactor according to the material ratio of 0.29 m²/L, the reactor was heated to 125°C to make the whole internal system in a high-pressure state; then, after the target temperature was kept at high temperature under high pressure for 6 h, the temperature was decreased until entering a normal temperature and normal pressure state of the internal system, then, the reactor was opened, the unidirectional veneer with partial substances removed was taken out and washed with water, and thus finishing the chemical modification process. The mass of the finally-obtained unidirectional veneer with partial substances removed was reduced by 42.0%.

### Example 6

A reaction solution was prepared firstly, and the total solution volume was 100 L. A reactor was a vertical reactor (externally connected to a circulating pump), and a material pot of the vertical reactor provided by the present invention was used for loading a unidirectional veneer for chemical treatment. Sodium hydroxide and sodium sulfite were dissolved in water, the concentration of sodium hydroxide in the reaction solution was 100 g/L, the concentration of sodium sulfite was 50 g/L, and the pH of the reaction solution was 14. Then, the reaction solution and a unidirectional basswood veneer with the thickness of 0.28 mm were put into the reactor according to the material ratio of 0.12 m²/L, the reactor was heated to 125°C to make the whole internal system in a high-pressure state; then, after the target temperature was kept at high temperature under high pressure for 4 h, the temperature was decreased until entering a normal temperature and normal pressure state of the internal system, then, the reactor was opened, the unidirectional veneer with partial substances removed was taken out and washed with water, and thus finishing the chemical modification process. The mass of the finally-obtained unidirectional veneer with partial substances removed was reduced by 46.8%.

### Example 7

A reaction solution was prepared firstly, and the total solution volume was 100 L. A reactor was a vertical reactor (externally connected to a circulating pump), and a material pot of the vertical reactor provided by the present invention was used for loading a unidirectional veneer for chemical treatment. Sodium hydroxide and sodium sulfite were dissolved in water, the concentration of sodium hydroxide in the reaction solution was 100 g/L, the concentration of sodium sulfite was 50 g/L, and the pH of the reaction solution was 14. Then, the reaction solution and a unidirectional basswood veneer with the thickness of 0.28 mm were put into the reactor according to the material ratio of 0.12 m²/L, the reactor was heated to 125°C to make the whole internal system in a high-pressure state; then, after the target temperature was kept at high temperature under high pressure for 5 h, the temperature was decreased until entering a normal temperature and normal pressure state of the internal system, then, the reactor was opened, the unidirectional veneer with partial substances removed was taken out and washed with water, and thus finishing the chemical modification process. The mass of the finally-obtained unidirectional veneer with partial substances removed was reduced by 49.1%.

### Example 8

A reaction solution was prepared firstly, and the total solution volume was 3 tons. A reactor was a vertical reactor (externally connected to a circulating pump), and a material pot of the vertical reactor provided by the present invention was used for loading a unidirectional veneer for chemical treatment. Sodium hydroxide and sodium sulfite were dissolved in water, the concentration of sodium hydroxide in the reaction solution was 100 g/L, the concentration of sodium sulfite was 50 g/L, and the pH of the reaction solution was 14. Then, the reaction solution and a unidirectional basswood veneer with the thickness of 0.28 mm were put into the reactor according to the material ratio of 0.25 m²/L, the reactor was heated to 125°C to make the whole internal system in a high-pressure state; then, after the target temperature was kept at high temperature under high pressure for 5 h, the temperature was decreased until entering a normal temperature and normal pressure state of the internal system, then, the reactor was opened, the unidirectional veneer with partial substances removed was taken out and washed with water, and thus finishing the chemical modification process. The mass of the finally-obtained unidirectional veneer with partial substances removed was reduced by 49.0%.

### Example 9

A reaction solution was prepared firstly, and the total solution volume was 3 tons. A reactor was a vertical reactor (externally connected to a circulating pump), and a material pot of the vertical reactor provided by the present invention was used for loading a unidirectional veneer for chemical treatment. Sodium hydroxide and sodium sulfite were dissolved in water, the concentration of sodium hydroxide in the reaction solution was 100 g/L, the concentration of sodium sulfite was 50 g/L, and the pH of the reaction solution was 14. Then, the reaction solution and a unidirectional basswood veneer with the thickness of 0.28 mm were put into the reactor according to the material ratio of 0.37 m²/L, the reactor was heated to 125°C to make the whole internal system in a high-pressure state; then, after the target temperature was kept at high temperature under high pressure for 5 h, the temperature was decreased until entering a normal temperature and normal pressure state of the internal system, then, the reactor was opened, the unidirectional veneer with partial substances removed was taken out and washed with water, and thus finishing the chemical modification process. The mass of the finally-obtained unidirectional veneer with partial substances removed was reduced by 48.2%.

The unidirectional veneers with partial substances removed obtained in the Examples 5-9 were subjected to follow-up treatment according to a method in the Example 1, so as to obtain the unidirectional wood fiber paper, and the tensile property of the unidirectional wood fiber paper in the fiber direction of the wood fiber paper was detected, and the obtained result is shown in Table 6.

**Table 6 Performance detection result of unidirectional fiber paper obtained in Examples 5-9**

| Examples | Mass decrease after reaction (%) | Tensile strength of wood fiber paper (MPa) | Young's modulus of wood fiber paper (GPa) |
|---|---|---|---|
| 5 | 42.0 | 349 | 30 |
| 6 | 46.8 | 371 | 31 |
| 7 | 49.1 | 380 | 33 |
| 8 | 49.0 | 368 | 32 |
| 9 | 48.2 | 411 | 34 |

### Example 10

The whole process was the same as that of the Example 1, and a splicing process was added.

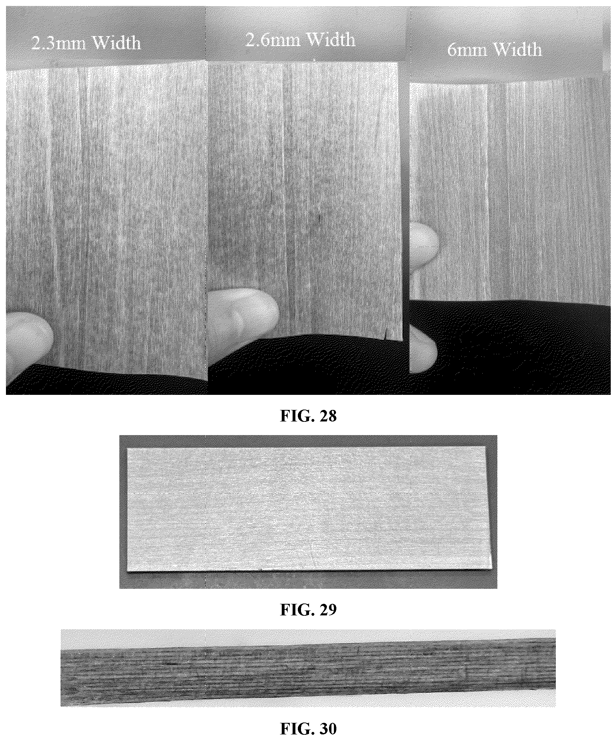

The width of the unidirectional veneer feedstock was 15 cm. The unidirectional veneers with partial substances removed were obtained by the chemical treatment method the same as that of the Example 1, the edges of the unidirectional veneers with partial substances removed were in overlapped in a wet state, and the stacking width was 2mm-6 mm. Then, the shrinkage process the same as that of the Example 1 was carried out, and finally the unidirectional wood fiber paper with the width equal to the width of two pieces of unidirectional wood fiber paper, namely the stacking width was prepared. As shown in FIG. 28, FIG. 28 is a photo of unidirectional wood fiber paper prepared by different stacking widths.

The unidirectional wood fiber paper with the stacking width of 2.6 mm was subjected transverse tensile test, and it was found that the transverse tensile strength of the unidirectional wood fiber paper was 0.67 kN/m, which was larger than the transverse tensile strength (0.57 kN/m) of the unidirectional wood fiber paper at a non-spliced part prepared by the same method, and it was indicated that the stacking positions of the wood fiber paper were tightly combined after complete drying. Mechanical tensile test was carried out in the fiber direction, the average breaking strength of the unidirectional wood fiber paper was 347 MPa, and the average elasticity modulus of the unidirectional wood fiber paper was 32 GPa. Wide unidirectional wood fiber paper could be obtained by the method.

### Example 11

The surface of the unidirectional wood fiber paper obtained in the Example 1 was coated with epoxy resin (the tensile strength was 60 MPa after pure resin was cured, and the Young's modulus was 3 GPa) to obtain an epoxy-wood fiber paper prepreg. The epoxy-wood fiber paper prepreg was laid and pasted in one way and then was subjected to vacuum bag pressing for 1 h at 80°C until the epoxy resin was completely cured, thus obtaining a wood fiber reinforced epoxy resin matrix composite, in which, the volume percent of the wood fiber reinforced material was 90%.

FIG. 29 is an overlook view of a wood fiber reinforced epoxy resin-based composite in an Example 11. FIG. 30 is a side view of a wood fiber reinforced epoxy resin-based composite in an Example 11

The mechanical property of the wood fiber reinforced composite in the Example 8 was detected according to the GB/T1499-2005 *Fibre-reinforced plastic composites-Determination of flexural properties,* and the flexural strength of the wood fiber reinforced composite was 349 MPa, and the Young's modulus was 29 GPa.

### Example 12

The unidirectional wood fiber paper obtained in the Example 1 was subjected to film covering, and is was combined with a Polyamide (PA) hot melt adhesive net film with the thickness of 0.02 mm and the areal density of 23 g/m², and thus a PA-wood fiber paper prepreg was obtained; a thermoplastic film was combined with the single surface of the PA-wood fiber paper prepreg, and the prepreg was laid and pasted in one way in the wood fiber reinforcing direction; after a structure that the wood fiber paper and the film-coated PA layer are alternately stacked was formed, pressure of 0.6 MPa was applied at 130°C for molding until PA reached a molten low-viscosity state, and thus wood fibers could be impregnated; and the wood fibers were started to be cooled to the room temperature after 10 min, PA was solidified, and thus the wood fiber reinforced polyamide composite was obtained.

The mechanical property of the wood fiber reinforced composite obtained in the Example 9 was detected according to the GB/T1499-2005 *Fibre-reinforced plastic composites-Determination of flexural properties,* and the flexural strength of the wood fiber reinforced composite was 363 MPa, the Young's modulus was 31 GPa, and the density was 1.30 g/cm³.

### Example 13

The chemical treatment was the same as that of the Example 1. Post-treatment was also basically the same as that of the Example 1, and the only difference was pressure. According to the embodiment, the veneer subjected to chemical treatment was subjected to transverse shrinkage once, the pressure of thickness shrinkage was set to be 10 MPa, and the obtained unidirectional wood fiber paper was subjected to mechanical tensile test to obtain the average breaking strength of 519 MPa, and the average elasticity modulus of 37 GPa.

### Example 14

The chemical treatment was the same as that of the Example 4, post-treatment was the same as that of the Example 1, and the only difference was the pressure applied during transverse shrinkage. In the transverse shrinkage process, a shrinkable soft film was adopted to apply transverse shrinkage force to the wood fiber paper. Two conditions were implemented, the corresponding equivalent pressures were 0.1 MPa and 0.5 MPa respectively, the obtained unidirectional wood fiber paper was subjected to mechanical property measurement, and the result is shown in Table 7.

**Table 7 Performance detection result of unidirectional fiber paper obtained in Example 14**

| Equivalent pressure | Strength in fiber direction | Modulus in fiber direction | Strength in direction vertical to fiber direction | Modulus in direction vertical to fiber direction |
|---|---|---|---|---|
| 0.1 MPa | 365 MPa | 32GPa | 9.1 MPa | 1.9GPa |
| 0.5 MPa | 386MPa | 34GPa | 12.3MPa | 2.1GPa |

### Example 15

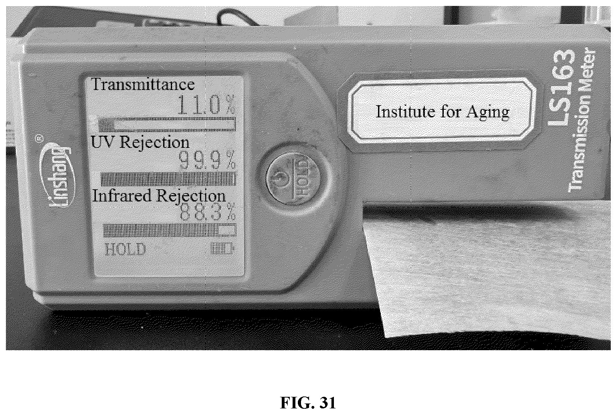

Part of unidirectional wood fiber paper samples (transverse shrinkage pressure being 0.1 MPa) in the Example 14 were taken for light transmittance measurement, and the light transmittance was 11.0%. The test result is shown in FIG. 31.

### Example 16

The wood fiber paper obtained in the Example 10 was subjected to a dip coating process to prepare an epoxy-wood fiber paper prepreg (the tensile strength was 60 MPa after pure resin was cured, and the Young's modulus was 3 GPa). The prepreg was laid and pasted in one way and then was subjected to vacuum bag pressing for 1 h at 80°C until epoxy resin was completely cured, and thus a wood fiber reinforced epoxy resin composite could be obtained, in which, the volume percent of the wood fiber reinforced material was 90%.

The mechanical property of the wood fiber reinforced composite obtained in the Example 16 was detected according to the GB/T1499-2005 *Fibre-reinforced plastic composites-Determination of flexural properties,* and the flexural strength of the wood fiber reinforced composite was 394 MPa, the bending elasticity modulus was 34 GPa.

The above-mentioned specific embodiments are further described in detail the purpose, technical solution and beneficial effects of the present invention, and it is to be understood that the above are only specific embodiments of the present invention and are not used for limiting the present invention, and any modifications, equivalent replacements, improvements, etc., made within the spirit and principles of the present invention shall be included in the scope of protection of the present invention.

## Claims

1. Unidirectional wood fiber paper, being prepared by shrinking a unidirectional veneer with partial substances removed in at least one direction, wherein
partial the substances comprise lignin and hemicellulose;
the thickness of the unidirectional wood fiber paper is smaller than or equal to 0.6 mm; and
the apparent thickness of the unidirectional wood fiber paper under a pressure not larger than 0.005 MPa is not greater than 4 times of the average thickness of the unidirectional wood fiber paper.

2. The unidirectional wood fiber paper according to claim 1, comprising wood fibers and/or fiber bundles, wherein the wood fibers and/or the fiber bundles are integrally arranged or extend in a single direction at a microscopic level.

3. The unidirectional wood fiber paper according to claim 2, wherein the density of the unidirectional wood fiber paper is 0.8-1.5 g/cm³;
and/or, the areal density of the unidirectional wood fiber paper is 20-400 g/m²;
and/or, the tensile strength of the unidirectional wood fiber paper in a direction parallel to the wood fibers is 150-1000 MPa.

4. The unidirectional wood fiber paper according to claim 2, wherein the thickness of the unidirectional wood fiber paper is 0.03-0.6 mm;
and/or, the Young's modulus of the unidirectional wood fiber paper in the direction parallel to the wood fibers is preferably 20-80 GPa.

5. The unidirectional wood fiber paper according to claim 1, wherein the thickness of the unidirectional veneer is less than or equal to 0.8 mm;
and/or, decomposition of the shrinkage force comprises transverse shrinkage and thickness shrinkage.

6. The unidirectional wood fiber paper according to claim 1, wherein the unidirectional veneer with partial substances shrinks in at least two directions;
the shrinkage comprises the transverse shrinkage and the thickness shrinkage; and
the directions of the shrinkage forces for the transverse shrinkage and the thickness shrinkage are crossed.

7. The unidirectional wood fiber paper according to claim 6, wherein the unidirectional veneer with partial substances removed comprises wood fibers and/or fiber bundles; the wood fibers and/or the fiber bundles are integrally arranged or extend in a single direction at a microscopic level;
the shrinkage force of the transverse shrinkage is the force parallel to the unidirectional veneer in a horizontal direction, and the force is in direction intersected with the extending direction of the wood fibers and/or fiber bundles in the plane; and/or, the shrinkage force of thickness shrinkage is the force in the direction vertical to the unidirectional veneer; and
the force in the horizontal direction and the force in the vertical direction are original applied forces independently from each other, and/or, forces produced by a force after decomposed or forces after composed.

8. The unidirectional wood fiber paper according to claim 6, wherein the apparent thickness of the unidirectional wood fiber paper under the pressure of 0.005 MPa does not exceed 3 times of the average thickness of the unidirectional wood fiber paper;
and/or, all and/or partial the unidirectional wood fiber paper has smooth plastic feeling;
and/or, when the thickness of the unidirectional wood fiber paper is less than 0.15 mm, the light transmittance of all and/or partial the unidirectional wood fiber paper is 2%-70%.

9. The unidirectional wood fiber paper according to claim 6, wherein the weight loss of unidirectional veneer with partial substances removed is 10%-60% relative to the unidirectional veneer;
and/or, the shrinkage percentage of the transverse shrinkage is 2%-40%; and the shrinkage percentage of the thickness shrinkage is 20%-90%.

10. A preparation method for unidirectional wood fiber paper, comprising the following steps:
S1) chemically modifying a unidirectional veneer to obtain a unidirectional veneer with partial substances removed; and
S2) performing shrinkage treatment on the unidirectional veneer with partial substances removed in at least one direction to obtain the unidirectional wood fiber paper; and
decomposition of the shrinkage force comprises transverse shrinkage and thickness shrinkage.

11. The preparation method according to claim 10, wherein the thickness of the unidirectional veneer is 0.05-0.8 mm;
and/or, the areal density of the unidirectional veneer is 20-450 g/m²;
and/or, the chemical modification in S1) is performed in a closed high-pressure system; the target temperature of chemical modification is 100-150°C; the target pressure of chemical modification is 0.07-1.9 MPa; the chemical modification is maintained in the target temperature/pressure for 1-12 h;
or, the chemical modification is performed under normal pressure; the chemical modification is maintained in the target temperature/pressure for 24-72 h; the temperature of chemical modification is the temperature at which water boils without elevated pressures;
and/or, after chemical modification is performed, a reaction solution is cooled, thus obtaining the unidirectional veneer with partial substances removed.

12. The preparation method according to claim 10, wherein in step S1), a modification solution for chemical modification comprises an alkaline substance, a sulfonating agent and water;
the pH value of the modification solution is 12-14;
the concentration of the alkaline substance in the modification solution is 0.01-5 kg/L;
the alkaline substance is one or more selected from the group consisting of sodium hydroxide, potassium hydroxide, sodium bicarbonate and potassium bicarbonate;
the concentration of the sulfonating agent in the modification solution is 0.01-5 kg/L;
the sulfonating agent in the modification solution is one or more selected from the group consisting of sulfite, chlorosulfonic acid, hydroxymethylsulfonate, sulfuryl chloride and sulfamic acid;
and/or, the material ratio of the unidirectional veneer and the modification solution for chemical modification is 4.6-184 cm³:1 L.
and/or, compared with the unidirectional veneer, the mass of the unidirectional veneer with partial substances removed is reduced by 10%-60%.

13. The preparation method according to claim 10, wherein the unidirectional veneer is placed in a material pot for chemical modification;
the material pot comprises a frame body, a partition plate and a frame cover; the partition plate is arranged in the frame body; and the side wall of the frame body, the bottom of the frame body, the partition plate and the frame cover are all provided with holes.

14. The preparation method according to claim 13, wherein the material pot is a cylindrical material frame; a plurality of partition plates are provided; and the plurality of partition plates are arranged in concentric circles within the frame body.

15. The preparation method according to claim 13, wherein the material pot is a cuboid material frame; a plurality of partition plates are provided; and the plurality of partition plates are arranged in parallel within the material pot.

16. The preparation method according to claim 10, wherein the shrinkage treatment comprises transverse shrinkage treatment and thickness shrinkage treatment; and the force of the transverse shrinkage treatment is intersected with the force of the thickness shrinkage treatment.

17. The preparation method according to claim 16, wherein the transverse shrinkage treatment is to apply an external mechanical force and/or perform spontaneous shrinkage as a result of dehydration in the transverse direction; and
the external mechanical force applied in the transverse direction is in a direction intersected with the extending direction of the wood fibers and/or fiber bundles of the unidirectional veneer with partial substances removed in the plane.

18. The preparation method according to claim 17, wherein applying the external mechanical force in the transverse direction is specifically that a film material that can perform transverse shrinkage is used and attached to the surface of unidirectional veneer with partial substances removed, and after pressure is applied, the film material is removed;
and/or, roller rubbing treatment is performed on the unidirectional veneer with partial substances removed;
and/or, pressure is transversely applied to the unidirectional veneer with partial substances removed

19. The preparation method according to claim 17, wherein pressure for applying the external mechanical force in the transverse direction is 0.001-1.5 MPa;
and/or, the temperature of the transverse shrinkage treatment is 15°C-150°C;
and/or, the time of the transverse shrinkage treatment is 1 s to 4 min.

20. The preparation method according to claim 16, wherein the thickness shrinkage comprises hot-pressing treatment under a negative pressure condition;
the pressure of the hot-pressing treatment is 0.1-60 MPa;
and/or, the temperature of the hot-pressing treatment is 50°C-150°C;
and/or, the time of the hot-pressing treatment is 0.5-20 min.

21. The preparation method according to claim 16, wherein the thickness shrinkage is performed on a single or stacked veneers; 2-20 veneers are stacked; and
the pressure of the thickness shrinkage treatment in the stacked condition is 0.1-60 MPa.

22. The preparation method according to claim 10, wherein the shrinkage rate in the transverse shrinkage treatment is 2%-40%;
and/or, the shrinkage rate in the thickness shrinkage is 20%-90%.

23. The preparation method according to claim 10, wherein splicing is carried out before or after shrinkage treatment; and
the splicing is specifically to mark splicing contours on the unidirectional veneer with partial substances removed or the wood fiber paper subjected to shrinkage treatment, and then splice the corresponding parts.

24. A preparation method for unidirectional wood fiber paper, comprising the following steps:
A1) chemically modifying a unidirectional veneer to obtain a unidirectional veneer with partial substances removed; and
A2) performing shrinkage treatment and levelling treatment on the unidirectional veneer with partial substances removed in at least one direction to obtain the unidirectional wood fiber paper; and
the levelling treatment is to perform planar hot pressing in a negative pressure air pumping environment.

25. The preparation method according to claim 24, wherein exhaust channels are arranged on two contact surface or a single contact surface of the unidirectional wood fiber paper during levelling treatment.

26. The preparation method according to claim 24, wherein the pressure in the levelling treatment is 0.01-2 MPa;
and/or, the time of the levelling treatment is 0.1-4 min;
and/or, the temperature of the levelling treatment is 40°C-150°C.

27. The preparation method according to claim 24, wherein the levelling treatment is selected from one or more of vacuum thermoforming or negative-pressure hot-pressing treatment;
and/or, the water content of the unidirectional wood fiber paper is less than or equal to 10 wt%.

28. The preparation method according to claim 24, wherein the shrinkage treatment comprises transverse shrinkage treatment and thickness shrinkage treatment;
the thickness shrinkage treatment is to apply a mechanical pressure in the thickness direction;
the pressure for applying the mechanical pressure in the thickness direction is 0.01-80 MPa;
and/or, the time of the thickness shrinkage treatment is 0.1-3 min;
and/or, the temperature of the thickness shrinkage treatment is 15 °C-150°C.

29. A unidirectional wood fiber paper prepreg, comprising the unidirectional wood fiber paper according to any one of claims 1 to 9 or the unidirectional wood fiber paper prepared by the preparation method according to any one of claims 10 to 28 and a polymer layer attached to at least one surface of the unidirectional wood fiber paper.

30. The unidirectional wood fiber paper prepreg according to claim 29, wherein the mass of the polymer layer is 5%-85% of the mass of the unidirectional wood fiber paper prepreg;
and/or, the thickness ratio of the polymer layer to the unidirectional wood fiber paper is (5:1)-(0.05:1);
and/or, the areal density of the unidirectional wood fiber paper prepreg is 30-500 g/m²;
and/or, the thickness of the unidirectional wood fiber paper prepreg is 0.03-0.7 mm.

31. The unidirectional wood fiber paper prepreg according to claim 29, wherein the polymer layer comprises a thermoplastic polymer and/or a thermosetting polymer; and
the gram weight of the polymer layer is 5-200 g/m².

32. A preparation method for a unidirectional wood fiber paper prepreg, comprising the following steps:
transferring a polymer to the unidirectional wood fiber paper according to any one of claims 1 to 9 or at least one surface of the unidirectional wood fiber paper prepared by the preparation method according to any one of claims 10 to 28 to obtain the unidirectional wood fiber paper prepreg; and the transfer method is selected from one or more of film covering, printing, infiltration and coating.

33. A wood fiber paper reinforced composite, comprising a plurality of layers of the unidirectional wood fiber paper according to any one of claims 1 to 9 or the unidirectional wood fiber paper prepared by the preparation method according to any one of claims 10 to 28; and
adjacent unidirectional wood fiber paper is bonded through the polymer.

34. The wood fiber paper reinforced composite according to claim 33, wherein the tensile strength of the wood fiber paper reinforced composite is 130-1000 MPa;
and/or, the flexural strength of the wood fiber paper reinforced composite is 130-1000 MPa;
and/or, the Young's modulus of the wood fiber paper reinforced composite is 12-75 GPa.

35. The wood fiber paper reinforced composite according to claim 33, wherein the thickness of one layer of wood fiber paper in the wood fiber paper reinforced composite is 0.02-0.6 mm;
and/or, the layered distribution of the wood fiber paper reinforced composite is clearly visible in the longitudinal cross-section;
and/or, the volume fraction of the wood fiber paper in the wood fiber paper reinforced composite is 40%-99%.

36. The wood fiber paper reinforced composite according to claim 33, wherein at least one surface of the wood fiber paper reinforced composite is provided with a waterproof polymer layer.

37. A preparation method for a wood fiber paper reinforced composite, comprising the following steps:
stacking, gluing and curing the unidirectional wood fiber paper according to any one of claims 1 to 9 or the unidirectional wood fiber paper prepared by the preparation method according to any one of claims 10 to 28 to obtain the wood fiber paper reinforced composite;
and/or, stacking, gluing and curing the unidirectional wood fiber paper prepreg according to any one of claims 29 to 31 or the unidirectional wood fiber paper prepreg prepared by the preparation method according to claim 32 to obtain the wood fiber paper reinforced composite.

38. A method for shrinkage of a unidirectional veneer, comprising: performing shrinkage treatment on the unidirectional veneer in at least one direction; and decomposition of the shrinkage force comprises transverse shrinkage and thickness shrinkage.

39. The method according to claim 38, wherein the unidirectional veneer is subjected to chemical treatment firstly to remove partial substances, and then subjected to shrinkage treatment in the at least one direction.

40. The method according to claim 38, wherein shrinkage comprises transverse shrinkage and thickness shrinkage; and directions of the shrinkage force for the transverse shrinkage and thickness shrinkage are crossed.

41. The method according to claim 40, wherein the unidirectional veneer comprises wood fibers and/or fiber bundles; the wood fibers and/or the fiber bundles are integrally arranged or extend in a single direction at a microscopic level;
the shrinkage force of transverse shrinkage is the force in the direction parallel to the unidirectional veneer, and is in a direction intersected with the extending direction of the wood fibers and/or fiber bundles of the unidirectional veneer in the plane; and/or, the shrinkage force of thickness shrinkage is the force in the direction vertical to the unidirectional veneer; and
the force in the horizontal direction and the force in the vertical direction are original applied forces independently from each other, and/or, forces produced by a force after decomposed or forces after composed.

42. The method according to claim 40, wherein the thickness shrinkage comprises hot-pressing treatment under a negative pressure condition;
the pressure of the hot-pressing treatment is 0.1-60 MPa;
and/or, the temperature of the hot-pressing treatment is 50°C-150°C;
and/or, the time of the hot-pressing treatment is 0.5-20 min.

43. A wood hollow tube, being prepared from the unidirectional wood fiber paper according to any one of claims 1 to 9, the unidirectional wood fiber paper prepared by the preparation method according to any one of claims 10 to 28, the unidirectional wood fiber paper prepreg according to any one of claims 29 to 31, the unidirectional wood fiber paper prepreg prepared by the preparation method according to claim 32, the wood fiber reinforced composite according to any one of claims 33 to 36 or the wood fiber reinforced composite prepared by the preparation method according to claim 37.
